# EUROPEAN PATENT APPLICATION

(11) **EP 4 328 712 A1**
(43) Date of publication of application: **28.02.2024**
(21) Application number: 21942335.7
(22) Date of filing: 27.05.2021
(51) Int. Cl.: G06F 1/3206

(54) **POWER CONSUMPTION ADJUSTMENT METHOD AND APPARATUS**

(71) Applicant: Huawei Technologies Co., Ltd., Shenzhen, Guangdong 518129 (CN)
(72) Inventor: GENG, Ye, Shenzhen, Guangdong 518129 (CN); WANG, Zhe, Shenzhen, Guangdong 518129 (CN); WANG, Ning, Shenzhen, Guangdong 518129 (CN); ZHENG, Qiaoshi, Shenzhen, Guangdong 518129 (CN); CHEN, Zhirui, Shenzhen, Guangdong 518129 (CN)
(74) Representative: Thun, Clemens
(86) International application number: PCT/CN2021/096505
(87) International publication number: WO 2022/246759

(57) **Abstract**

A power consumption adjustment method and apparatus are provided, to improve accuracy of frequency and voltage adjustment. The method includes: obtaining a historical running feature of a task; determining a target frequency and a target voltage based on the historical running feature of the task and a state of a voltage domain in which a processor core that is to run the task is located; and adjusting, based on the target frequency and the target voltage, a frequency and a voltage of each processor core located in the voltage domain. Frequency and voltage adjustment are performed based on the historical running feature of the task and the state of the voltage domain, to help select a frequency and a voltage that are suitable for a current running requirement of the task from a power consumption configuration currently supported by the voltage domain to run the task, to effectively improve accuracy of frequency and voltage adjustment. In addition, the task is run based on the frequency and the voltage that are suitable for the task, and therefore a task processing capability is improved.

## Description

### TECHNICAL FIELD

This application relates to the field of processor technologies, and in particular, to a power consumption adjustment method and apparatus.

### BACKGROUND

Before a processor is delivered from a factory, some standard working parameters such as a rated working frequency and a rated working voltage are usually defined. In a normal case, the processor performs a processing operation based on the rated working frequency and the rated working voltage. However, the rated working frequency and the rated working voltage may not enable the processor to obtain good performance. For example, if the processor is in a low-frequency and low-voltage working state for a long time, a processing capability of the processor may be wasted; or if the processor is in a high-frequency and high-voltage working state for a long time, the processor may have a risk of overheating or overcurrent, which is not conducive to maintaining a service life and reliability of a component in the processor. Therefore, how to adjust the processor to a proper frequency and voltage becomes an urgent problem to be resolved currently.

In an existing frequency and voltage adjustment policy, before the processor executes a task, power consumption required for executing the task in a future period of time is first predicted in a decoding phase based on complexity of code of the task, and a frequency and a voltage of the processor are set in advance based on the predicted power consumption, so that the frequency and the voltage that are set can match the power consumption required for subsequently executing the task. In this policy, frequency and voltage adjustment can be performed on the processor in advance based on the power consumption required for the task. However, the power consumption of the processor is obtained through prediction based on the code of the task, and a prediction manner is inaccurate. In addition, a prediction result may not match an actual situation, and consequently performance of the processor after frequency and voltage adjustment is not improved but is degraded, which is not conducive to improving a task processing capability of the processor.

### SUMMARY

This application provides a power consumption adjustment method and apparatus, to improve accuracy of frequency and voltage adjustment.

According to a first aspect, this application provides a power consumption adjustment method. The method is applicable to a power consumption adjustment apparatus. The method includes: The power consumption adjustment apparatus obtains a historical running feature of a task; determines a target frequency and a target voltage based on the historical running feature and a state of a voltage domain in which a processor core that is to run the task is located; and adjusts, based on the target frequency and the target voltage, a frequency and a voltage of each processor core located in the voltage domain. In this design, the historical running feature of the task can represent a power consumption requirement existing when the task is run in a real environment, and the state of the voltage domain in which the processor core that is to run the task is located can represent a power consumption configuration that can be supported by the voltage domain. Therefore, frequency and voltage adjustment are performed based on the historical running feature of the task and the state of the voltage domain, to help select a frequency and a voltage that are suitable for a current running requirement of the task from a power consumption configuration currently supported by the voltage domain to run the task, to effectively improve accuracy of frequency and voltage adjustment. In addition, the task is run based on the frequency and the voltage that are suitable for the task, and therefore a task processing capability of a processor is improved.

In a possible design, that the power consumption adjustment apparatus obtains a historical running feature of a task includes: The power consumption adjustment apparatus obtains a task tag of the task after determining that the task is scheduled to the processor core; and queries a preset correspondence between a task tag and a historical running feature based on the task tag of the task, to obtain the historical running feature corresponding to the task tag of the task. In this design, the correspondence between a task tag and a historical running feature is set, so that a historical running feature of a historical task with the same task tag can be quickly obtained by querying the correspondence. This helps improve efficiency of power consumption adjustment. In addition, in this design, the historical running feature starts to be obtained after the task is successfully scheduled. Therefore, an adjustment parameter can be determined as much as possible before the task is actually executed, so that the determined adjustment parameter is directly configured when the task is executed, to help adjust, in a more timely manner, the frequency and the voltage of the processor core to a frequency and a voltage that are suitable for running the task.

In a possible design, if the preset correspondence between a task tag and a historical running feature does not include the historical running feature corresponding to the task tag of the task, the power consumption adjustment apparatus may further directly determine the target frequency and the target voltage based on the state of the voltage domain. In this design, power consumption adjustment is performed based on the state of the voltage domain when no historical task has been run. This helps maximize all available power in the voltage domain, and improve a task processing capability and processing efficiency.

In a possible design, after determining that execution of the task is completed, the power consumption adjustment apparatus may further obtain a historical running feature existing in a process of executing the task by the processor core, and update the preset correspondence between a task tag and a historical running feature by using the task tag of the task and the obtained historical running feature. If the preset correspondence does not include the historical running feature corresponding to the task tag of the task, the power consumption adjustment apparatus may generate a correspondence between the task tag of the task and the obtained historical running feature, and add the correspondence to the preset correspondence. If the preset correspondence includes the historical running feature corresponding to the task tag of the task, the power consumption adjustment apparatus may replace the original historical running feature in the preset correspondence with the obtained historical running feature, or may replace the original historical running feature in the preset correspondence with an average value or a weighted average value of the obtained historical running feature and the original historical running feature in the preset correspondence. In this way, when the processor core runs the task next time, the power consumption adjustment apparatus can obtain the historical running feature corresponding to current running from the preset correspondence, to determine next power consumption adjustment based on the historical running feature corresponding to current running, to effectively improve accuracy of next power consumption adjustment.

In a possible design, when the historical running feature of the task includes a historical memory access bottleneck degree of the task, the power consumption adjustment apparatus may obtain the historical memory access bottleneck degree of the task by weighting a value of a memory access instruction in the task in a case of each preset running indicator. The preset running indicator may include at least one of the following indicators: a performance counter used when hardware executes the memory access instruction, a quantity of uncompleted memory access instructions sent to an off-chip memory, a cache hit rate of the memory access instruction, a ratio of an execution time of a computing instruction to a total running time of the task, a ratio of an execution time of the memory access instruction to the total running time of the task, a ratio of the execution time of the computing instruction to the execution time of the memory access instruction, and a ratio of a blocking time of the memory access instruction to the total running time of the task. In this way, the historical memory access bottleneck degree is comprehensively represented by using a plurality of indicators related to memory access performance, so that the historical memory access bottleneck degree can more comprehensively and accurately represent memory access performance of the task in a running process.

In a possible design, that the power consumption adjustment apparatus determines a target frequency and a target voltage based on the historical running feature of the task and a state of a voltage domain in which a processor core that is to run the task is located includes: The power consumption adjustment apparatus determines, based on a current temperature and current power consumption of the voltage domain, a maximum first frequency that can be supported by the voltage domain; determines, based on the historical running feature of the task, a second frequency that meets a running requirement of the task; uses a lower frequency in the first frequency and the second frequency as the target frequency; and uses a voltage corresponding to the target frequency as the target voltage based on a preset correspondence between a frequency and a voltage. In this way, the target frequency cannot exceed the maximum frequency that can be currently supported by the voltage domain, can meet the running requirement of the task in the current voltage domain as much as possible, and may be considered as an optimal frequency, in the current voltage domain, suitable for running the task, and the target voltage determined based on the optimal frequency may be considered as an optimal voltage that can be used to adjust the frequency of the processor core to the optimal frequency.

In a possible design, the power consumption adjustment apparatus may further cyclically determine the first frequency and the second frequency in a running period of the task, and use a lower frequency in a first frequency and a second frequency determined in each cycle as a target frequency in a next cycle, to adjust power consumption of the task in each running period at a finer granularity. Cycle duration used to determine the first frequency may be the same as cycle duration used to determine the second frequency, so that a frequency in each next cycle can be determined based on a latest state of the voltage domain and a latest historical working feature, to further improve accuracy of the target frequency. Alternatively, cycle duration used to determine the first frequency may be different from cycle duration used to determine the second frequency. In this case, the target frequency may be used for a cycle corresponding to shorter cycle duration. In this way, independent cycle duration is set for the historical running feature of the task and the state of the voltage domain, to help decouple calculation processes of the first frequency and the second frequency.

In a possible design, when the historical running feature of the task includes the historical memory access bottleneck degree of the task, the power consumption adjustment apparatus may determine, based on a preset correspondence between a memory access bottleneck degree range and a frequency, a target memory access bottleneck degree range to which the historical memory access bottleneck degree of the task belongs, and use a frequency corresponding to the target memory access bottleneck degree range as the second frequency. In this design, for the memory access bottleneck degree, a level is obtained through division, so that a second frequency suitable for a memory access bottleneck level of the current task can be configured for the current task.

In a possible design, when the historical running feature of the task includes historical running duration of the task, before adjusting, based on the target frequency and the target voltage, the frequency and the voltage of each processor core located in the voltage domain, the power consumption adjustment apparatus may further first compare the historical running duration of the task with preset frequency and voltage adjustment duration. If the historical running duration of the task is not less than the preset frequency and voltage adjustment duration, it means that before execution of the task is completed, work of the processor core can be adjusted to the target frequency and the target voltage that meet the running requirement of the task. In this case, the power consumption adjustment apparatus may perform frequency and voltage adjustment for the task, so that the processor core executes the task by using the frequency and the voltage that meet the running requirement of the task. If the historical running duration of the task is less than the preset frequency and voltage adjustment duration, it means that after execution of the task is completed in the future, the power consumption adjustment apparatus possibly cannot adjust work of the processor core to the target frequency and the target voltage that meet the running requirement of the task. In this case, the power consumption adjustment apparatus may no longer perform frequency and voltage adjustment for the task, to reduce a useless execution procedure and save a computing resource.

In a possible design, when the historical running feature of the task includes historical running duration of the task, after determining that the historical running duration of the task is less than preset frequency and voltage adjustment duration, the power consumption adjustment apparatus may further obtain at least one task to be processed after the processor core processes the task; and calculate total historical running duration of at least two tasks including the task based on respective historical running duration of the at least two tasks. When the at least two tasks have a same historical running feature, even if the historical running duration of the current task is less than the preset frequency and voltage adjustment duration, the power consumption adjustment apparatus may still perform frequency and voltage adjustment for the processor core provided that the total historical running duration of the at least two tasks is not less than the preset frequency and voltage adjustment duration, but an adjusted frequency and voltage may not be used for the current task, and may be used for a same type of task that has a same historical running feature as the current task. When the at least two tasks have different historical running features, or the at least two tasks have a same historical running feature, and the total historical running duration of the at least two tasks is less than the preset frequency and voltage adjustment duration, the power consumption adjustment apparatus may no longer perform frequency and voltage adjustment for the processor core, to avoid a useless procedure and reduce power consumption of the power consumption adjustment apparatus.

According to a second aspect, this application provides a power consumption adjustment apparatus, including: an obtaining module, configured to obtain a historical running feature of a task; a determining module, configured to determine a target frequency and a target voltage based on the historical running feature of the task and a state of a voltage domain in which a processor core that is to run the task is located; and an adjustment module, configured to adjust, based on the target frequency and the target voltage, a frequency and a voltage of each processor core located in the voltage domain.

In a possible design, the obtaining module is specifically configured to: obtain a task tag of the task after it is determined that the task is scheduled to the processor core; and query a preset correspondence between a task tag and a historical running feature, to obtain the historical running feature corresponding to the task tag of the task.

In a possible design, when the obtaining module cannot obtain the historical running feature corresponding to the task tag of the task from the preset correspondence between a task tag and a historical running feature, the determining module may further determine the target frequency and the target voltage based on the state of the voltage domain.

In a possible design, after it is determined that execution of the task is completed, the obtaining module may further obtain a historical running feature existing in a process of executing the task by the processor core, and update the preset correspondence between a task tag and a historical running feature by using the task tag of the task and the obtained historical running feature.

In a possible design, when the historical running feature of the task includes a historical memory access bottleneck degree of the task, the obtaining module is specifically configured to obtain the historical memory access bottleneck degree of the task by weighting a value of a memory access instruction in the task in a case of each preset running indicator. The preset running indicator includes at least one of the following indicators: a performance counter used when hardware executes the memory access instruction, a quantity of uncompleted memory access instructions sent to an off-chip memory, a cache hit rate of the memory access instruction, a ratio of an execution time of a computing instruction to a total running time of the task, a ratio of an execution time of the memory access instruction to the total running time of the task, a ratio of the execution time of the computing instruction to the execution time of the memory access instruction, and a ratio of a blocking time of the memory access instruction to the total running time of the task.

In a possible design, the determining module is specifically configured to: determine, based on a current temperature and current power consumption of the voltage domain, a maximum first frequency that can be supported by the voltage domain; determine, based on the historical running feature of the task, a second frequency that meets a running requirement of the task; use a lower frequency in the first frequency and the second frequency as the target frequency; and use a voltage corresponding to the target frequency as the target voltage based on a preset correspondence between a frequency and a voltage.

In a possible design, the determining module may further cyclically determine the first frequency and the second frequency in a running period of the task, and use a lower frequency in a first frequency and a second frequency determined in each cycle as a target frequency in a next cycle. Cycle duration used to determine the first frequency is the same as cycle duration used to determine the second frequency. Alternatively, cycle duration used to determine the first frequency is different from cycle duration used to determine the second frequency, and the target frequency is used for a cycle corresponding to shorter cycle duration.

In a possible design, when the historical running feature of the task includes the historical memory access bottleneck degree of the task, the determining module is specifically configured to: determine, based on a preset correspondence between a memory access bottleneck degree range and a frequency, a target memory access bottleneck degree range to which the historical memory access bottleneck degree of the task belongs, and use a frequency corresponding to the target memory access bottleneck degree range as the second frequency.

In a possible design, when the historical running feature of the task includes historical running duration of the task, before the adjustment module adjusts, based on the target frequency and the target voltage, the frequency and the voltage of each processor core located in the voltage domain, the determining module may further first determine that the historical running duration of the task is not less than preset frequency and voltage adjustment duration.

In a possible design, when the historical running feature of the task includes historical running duration of the task, before the adjustment module adjusts, based on the target frequency and the target voltage, the frequency and the voltage of each processor core located in the voltage domain, the determining module may further first determine that the historical running duration of the task is less than preset frequency and voltage adjustment duration; obtain at least one task to be processed after the processor core processes the task; calculate total historical running duration of at least two tasks including the task based on respective historical running duration of the at least two tasks; and determine that the at least two tasks have a same historical running feature, and the total historical running duration of the at least two tasks is not less than the preset frequency and voltage adjustment duration.

According to a third aspect, this application provides a processor, including a power consumption adjustment apparatus and M processor cores located in a same voltage domain. The power consumption adjustment apparatus is connected to the M processor cores, where M is a positive integer. The power consumption adjustment apparatus may obtain a historical running feature of a task; determine a target frequency and a target voltage based on the historical running feature and a state of a voltage domain in which a processor core that is to run the task is located; and when the processor core is one of the M processor cores, adjust frequencies and voltages of the M processor cores based on the target frequency and the target voltage.

In a possible design, the processor may further include a frequency and voltage adjustment execution unit connected to the M processor cores, and the power consumption adjustment apparatus is further connected to the frequency and voltage adjustment execution unit. In this case, the power consumption adjustment apparatus may generate a frequency and voltage adjustment indication message based on the target frequency and the target voltage, and send the frequency and voltage adjustment indication message to the frequency and voltage adjustment execution unit. The frequency and voltage adjustment execution unit may adjust the frequencies of the M processor cores to the target frequency and the voltages of the M processor cores to the target voltage based on the frequency and voltage adjustment indication message.

In a possible design, the power consumption adjustment apparatus may further include a task scheduling unit and a frequency and voltage adjustment control unit. After scheduling the task to the processor core, the task scheduling unit may send a task tag of the task to the frequency and voltage adjustment control unit. After receiving the task tag of the task, the frequency and voltage adjustment control unit may query a preset correspondence between a task tag and a historical running feature, to obtain the historical running feature corresponding to the task tag of the task.

In a possible design, when the preset correspondence between a task tag and a historical running feature does not include the historical running feature corresponding to the task tag of the task, the frequency and voltage adjustment control unit may further determine the target frequency and the target voltage based on the state of the voltage domain.

In a possible design, the processor core that is to run the task may further send a task start message to the task scheduling unit when starting to run the task, and send a task end message to the task scheduling unit after ending running of the task; and in a time period from a time at which the task start message is received to a time at which the task end message is received, the task scheduling unit collects state information existing when the processor core runs the task, determines a historical running feature of the task based on the state information, and updates the preset correspondence between a task tag and a historical running feature by using the task tag of the task and the determined historical running feature.

In a possible design, when the historical running feature of the task includes a historical memory access bottleneck degree of the task, the task scheduling unit may obtain the historical memory access bottleneck degree of the task by weighting a value of a memory access instruction in the task in a case of each preset running indicator. The preset running indicator includes at least one of the following indicators: a performance counter used when hardware executes the memory access instruction, a quantity of uncompleted memory access instructions sent to an off-chip memory, a cache hit rate of the memory access instruction, a ratio of an execution time of a computing instruction to a total running time of the task, a ratio of an execution time of the memory access instruction to the total running time of the task, a ratio of the execution time of the computing instruction to the execution time of the memory access instruction, and a ratio of a blocking time of the memory access instruction to the total running time of the task.

In a possible design, the processor may further include a temperature sensor and a power consumption sensor that are connected to the voltage domain. The temperature sensor may send a current temperature of the voltage domain to the frequency and voltage adjustment control unit. The power consumption sensor may send current power consumption of the voltage domain to the frequency and voltage adjustment control unit. The frequency and voltage adjustment control unit may determine, based on the current temperature and the current power consumption of the voltage domain, a maximum first frequency that can be supported by the voltage domain; determine, based on the historical running feature of the task, a second frequency that meets a running requirement of the task; use a lower frequency in the first frequency and the second frequency as the target frequency; and use a voltage corresponding to the target frequency as the target voltage based on a preset correspondence between a frequency and a voltage.

In a possible design, the frequency and voltage adjustment control unit may further cyclically determine the first frequency and the second frequency in a running period of the task, and use a lower frequency in a first frequency and a second frequency determined in each cycle as a target frequency in a next cycle. Cycle duration used to determine the first frequency is the same as cycle duration used to determine the second frequency. Alternatively, cycle duration used to determine the first frequency is different from cycle duration used to determine the second frequency, and the target frequency is used for a cycle corresponding to shorter cycle duration.

In a possible design, when the historical running feature of the task includes the historical memory access bottleneck degree of the task, the frequency and voltage adjustment control unit may determine, based on a preset correspondence between a memory access bottleneck degree range and a frequency, a target memory access bottleneck degree range to which the historical memory access bottleneck degree of the task belongs, and use a frequency corresponding to the target memory access bottleneck degree range as the second frequency.

In a possible design, when the historical running feature of the task includes historical running duration of the task, before adjusting, based on the target frequency and the target voltage, a frequency and a voltage of each processor core located in the voltage domain, the frequency and voltage adjustment control unit may further first determine that the historical running duration of the task is not less than preset frequency and voltage adjustment duration.

In a possible design, when the historical running feature of the task includes historical running duration of the task, before adjusting, based on the target frequency and the target voltage, a frequency and a voltage of each processor core located in the voltage domain, the frequency and voltage adjustment control unit may further first determine that the historical running duration of the task is less than preset frequency and voltage adjustment duration; obtain at least one task to be processed after the processor core processes the task; calculate total historical running duration of at least two tasks including the task based on respective historical running duration of the at least two tasks; and determine that the at least two tasks have a same historical running feature, and the total historical running duration of the at least two tasks is not less than the preset frequency and voltage adjustment duration.

According to a fourth aspect, this application provides an electronic device, including a processor. The processor is coupled to a memory, and the processor is configured to execute a computer program stored in the memory, to enable the electronic device to perform the method according to any design of the first aspect.

For beneficial effects of any design of the second aspect to the fourth aspect, refer to the beneficial effects that can be achieved in the corresponding design of the first aspect. Details are not described in this application.

### BRIEF DESCRIPTION OF DRAWINGS

FIG. 1 is an example of a schematic diagram of a structure of a processor according to an embodiment of this application;
FIG. 2 is an example of a schematic flowchart of a power consumption adjustment method according to an embodiment of this application;
FIG. 3 is an example of a schematic flowchart of another power consumption adjustment method according to an embodiment of this application;
FIG. 4 is an example of a diagram of a preset correspondence between a memory access bottleneck degree and a frequency according to an embodiment of this application;
FIG. 5 is an example of a diagram of a correspondence between a memory access bottleneck degree and energy efficiency improvement space according to an embodiment of this application;
FIG. 6 is an example of a diagram of preset correspondences between a memory access bottleneck degree and a frequency in a case of different requirements according to an embodiment of this application;
FIG. 7 is an example of a schematic diagram of an interaction procedure in a power consumption adjustment method according to an embodiment of this application;
FIG. 8 is an example of a diagram of task information obtained by splitting a neural network service according to an embodiment of this application;
FIG. 9 is an example of a schematic diagram of a preset correspondence table between a task tag and a historical running feature according to an embodiment of this application; and
FIG. 10 is an example of a schematic diagram of a structure of a power consumption adjustment apparatus according to an embodiment of this application.

### DESCRIPTION OF EMBODIMENTS

The power consumption adjustment solutions disclosed in this application may be applied to an electronic device having a task processing capability. In some embodiments of this application, the power consumption adjustment apparatus may be an electronic device or an independent unit. When the power consumption adjustment apparatus is an independent unit, the unit may be built into the electronic device, and when a processor core in the electronic device runs a task, configure a frequency and a voltage that are suitable for running the task for the processor core, to maximize power headroom of the processor core and improve a task processing capability of the processor core while meeting a heat dissipation requirement of the processor core. In some other embodiments of this application, the power consumption adjustment apparatus may be a unit packaged into an electronic device, and is configured to implement a frequency and voltage adjustment function of the electronic device. The electronic device may be a computer device having a processor, for example, a desktop computer, a personal computer, or a server. It should be further understood that the electronic device may alternatively be a portable electronic device having a processor, for example, a mobile phone, a tablet computer, a wearable device (for example, a smartwatch) having a wireless communication function, or a vehicle-mounted device. An example embodiment of the portable electronic device includes but is not limited to a portable electronic device equipped with iOS^{®}, Android^{®}, Microsoft', or another operating system. The portable electronic device may alternatively be, for example, a laptop computer (Laptop) with a touch-sensitive surface (for example, a touch panel).

To make the objectives, technical solutions, and advantages of this application clearer, the following clearly and completely describes the technical solutions in embodiments of the present invention with reference to the accompanying drawings in embodiments of the present invention. It should be understood that the described embodiments are merely some but not all of embodiments of the present invention. A specific operation method in a method embodiment may also be applied to an apparatus embodiment or a system embodiment. In addition, in the descriptions of this application, "at least one" means one or more, and " a plurality of" means two or more. In view of this, in embodiments of the present invention, "a plurality of" may also be understood as "at least two". The term "and/or" describes an association relationship between associated objects, and represents that three relationships may exist. For example, A and/or B may represent the following three cases: Only A exists, both A and B exist, and only B exists. In addition, the character "/" usually indicates an "or" relationship between associated objects unless otherwise specified. In addition, it should be understood that in the descriptions of this application, terms such as "first" and "second" are merely used for distinguishing and description, but should not be understood as an indication or implication of relative importance, or should not be understood as an indication or implication of a sequence.

It should be noted that the "connection" in embodiments of this application may be understood as an electric connection, and a connection between two electrical elements may be a direct or indirect connection between the two electrical elements. For example, a connection between A and B may represent that A and B are directly connected to each other, or A and B are indirectly connected to each other by using one or more other electrical elements. For example, the connection between A and B may also represent that A is directly connected to C, C is directly connected to B, and A and B are connected to each other through C. In some scenarios, the "connection" may also be understood as coupling, for example, electromagnetic coupling between two inductors. In conclusion, the connection between A and B enables transmission of electric energy between A and B.

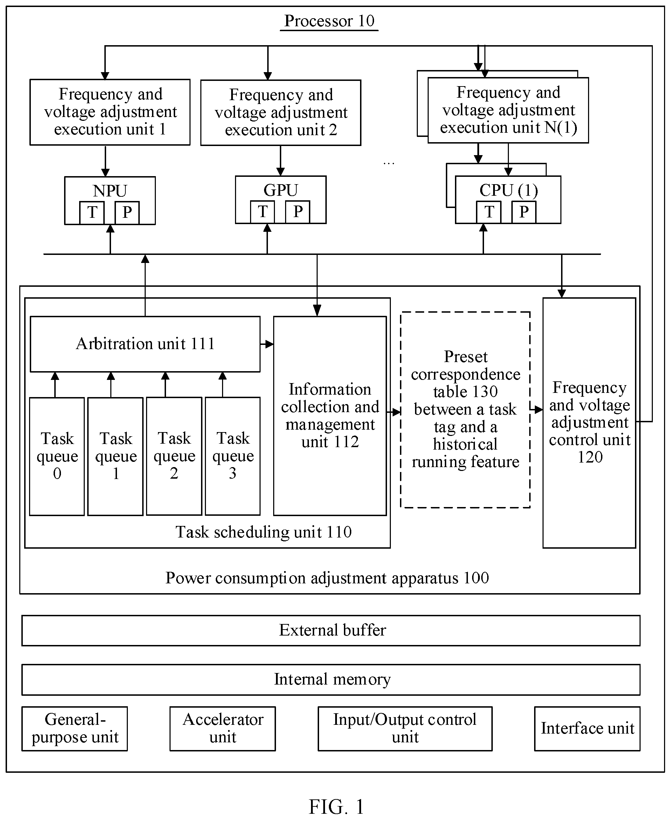

FIG. 1 is an example of a schematic diagram of a structure of a processor according to an embodiment of this application. The processor 10 shown in the figure may include one or more chips, for example, may include a system-on-a-chip (system-on-a-chip, SoC) or a chip set including a plurality of chips. The processor 10 may include at least one processing unit, for example, may include a neural-network processing unit (neural-network processing unit, NPU), a graphics processing unit (graphics processing unit, GPU), and a central processing unit (central processing unit, CPU) shown in FIG. 1, and may further include an application processor (application processor, AP), a modem processor, an image signal processor (image signal processor, ISP), a video codec, a digital signal processor (digital signal processor, DSP), and/or a baseband processor. The at least one processing unit is also referred to as at least one processing subsystem, belongs to a core component of the processor 10, and is configured to implement a processing function of the processor 10. Different processing units in the at least one processing unit may be deployed on different chips in a distributed manner, or may be integrated into one chip. This is not specifically limited.

As still shown in FIG. 1, the processor 10 may further include a non-core component, for example, a general-purpose unit (including a counter, a decoder, a signal generator, and the like), an accelerator unit, an input/output control unit, an interface unit, an internal memory, and an external buffer. The internal memory and the external buffer are collectively referred to as a storage unit of the processor 10, and are configured to store instructions and data. The instructions and the data may be invoked, so that a frequency and a voltage of a processor core can be flexibly adjusted when the processor core runs a task. In some embodiments, the storage unit may be a cache. The cache may store just used or cyclically used instructions or data. When the instructions or the data need or needs to be used again, the instructions or the data may be directly invoked from the cache. This can avoid repeated access, can reduce a waiting time, and can improve task processing efficiency.

Further, for example, each processing unit of the processor 10 may include one or more processor cores. When a plurality of processor cores are included, the plurality of processor cores may be grouped into one or more voltage domains, and processor cores located in a same voltage domain have a same working voltage and a same working frequency. For example, as still shown in FIG. 1, processor cores that belong to a CPU in the processor 10 are grouped into two voltage domains. If there is a voltage domain CPU1 and a voltage domain CPU2, a processor core in the voltage domain CPU1 and a processor core in the voltage domain CPU2 each may have an independent working voltage and working frequency, and the working voltage and the working frequency of the processor core in the voltage domain CPU 1 may be the same as or different from the working voltage and the working frequency of the processor core in the voltage domain CPU2. This is not specifically limited. In addition, a plurality of processor cores in a same voltage domain may be multi-core heterogeneous, that is, the plurality of processor cores have different structures and can be configured to implement different functions, or may be multi-core homogeneous, that is, the plurality of processor cores have a same structure and are configured to implement a same function. This is not specifically limited.

Further, for example, to implement separate frequency and voltage adjustment for each voltage domain, the processor 10 may further include frequency and voltage adjustment execution units that are connected to voltage domains in a one-to-one correspondence. Each frequency and voltage adjustment unit is connected to all processor cores in a corresponding voltage domain, and is configured to perform a uniform frequency and voltage adjustment operation on all the processor cores in the corresponding voltage domain. For example, if the processor cores that belong to the CPU are grouped into the voltage domain CPU1 and the voltage domain CPU2, as shown in FIG. 1, the processor 10 correspondingly further includes a frequency and voltage adjustment execution unit N1 corresponding to the voltage domain CPU1 and a frequency and voltage adjustment execution unit N2 corresponding to the voltage domain CPU2. The frequency and voltage adjustment execution unit N1 is connected to all processor cores in the voltage domain CPU1, and is configured to adjust frequencies and voltages of all the processor cores in the voltage domain CPU1 to a same working frequency and a same working voltage. The frequency and voltage adjustment execution unit N2 is connected to all processor cores in the voltage domain CPU2, and is configured to adjust frequencies and voltages of all the processor cores in the voltage domain CPU2 to a same working frequency and a same working voltage.

It should be noted that for the frequency and voltage adjustment execution unit, a frequency adjustment function and a voltage adjustment function may be integrated into one independent physical device, or a frequency adjustment function and a voltage adjustment function may be deployed on different physical devices in a distributed manner. This is not limited herein. In addition, each frequency and voltage adjustment execution unit is shared by all the processor cores in the corresponding voltage domain. This is merely an example for description. In another possible example, a separate frequency and voltage adjustment execution unit may be disposed for each processor core, to separately adjust a frequency and a voltage of each processor core. Alternatively, only a frequency and voltage adjustment execution unit corresponding to one or more voltage domains may be disposed, or only a frequency and voltage adjustment execution unit corresponding to one or more processor cores may be disposed, so that frequency and voltage adjustment are performed only on a voltage domain or a processor core for which the frequency and voltage adjustment execution unit is disposed. Alternatively, a frequency and voltage adjustment execution unit connected to the non-core component may be further disposed, so that a frequency and a voltage of the non-core component can be adjusted. Certainly, the non-core component described herein is a component that works at a specified frequency.

Further, for example, the processor 10 may further include a power consumption adjustment apparatus 100. The power consumption adjustment apparatus 100 is connected to the frequency and voltage adjustment execution units corresponding to the voltage domains. When a frequency and a voltage of a voltage domain need to be adjusted, the power consumption adjustment apparatus 100 may send a frequency and voltage adjustment indication message to a frequency and voltage adjustment execution unit connected to the voltage domain, to indicate the frequency and voltage adjustment execution unit to adjust frequencies and voltages of all processor cores in the connected voltage domain based on the frequency and voltage adjustment indication message. The frequency and voltage adjustment indication message may include a specific frequency value and a specific voltage value. After receiving the frequency and voltage adjustment indication message, the frequency and voltage adjustment execution unit adjusts the frequencies of all the processor cores in the connected voltage domain to the specific frequency value, and adjusts the voltages of all the processor cores in the connected voltage domain to the specific voltage value. Alternatively, the frequency and voltage adjustment indication message may include an adjustment trend of an increase or a decrease, but does not include a specific frequency value and a specific voltage value. After receiving the frequency and voltage adjustment indication message, the frequency and voltage adjustment execution unit increases or decreases the frequencies and the voltages of all the processor cores in the connected voltage domain based on the corresponding adjustment trend, and a specific value for the increase or the decrease may be independently determined by the frequency and voltage adjustment execution unit.

It should be understood that the processor 10 shown in the figure is merely an example. The processor 10 may have more or fewer components than those shown in the figure, two or more components may be combined, or different component configurations may be used. For example, the power consumption adjustment apparatus 100 may be an independent device, or may be logically packaged into inherent logic of one or more processor cores or non-core components, and implemented as firmware in an original device of the processor 10, or certainly may be a combination thereof. The frequency and voltage adjustment execution unit may be an independent device, or may be logically packaged into inherent logic of one or more processor cores in a corresponding voltage domain, and implemented as firmware in an original device of the processor 10, or may be packaged into inherent logic of the power consumption adjustment apparatus 100, and implemented as firmware of the power consumption adjustment apparatus 100, or certainly may be a combination thereof. In addition, although FIG. 1 shows only a connection relationship between some components, the power consumption adjustment apparatus 100 and each processor core, the power consumption adjustment apparatus 100 and each frequency and voltage adjustment execution unit, and the processor core and the non-core component may be connected to each other by using a bus, to implement communication and interaction between any two components of the processor 10.

Based on the processor architecture shown in FIG. 1, the following describes how to adjust a frequency and a voltage of each processor core in a voltage domain. It should be understood that adjustment of a frequency and a voltage of a processor core in another voltage domain, adjustment of a frequency and a voltage of a processor core when a frequency and voltage adjustment execution unit is directly disposed in the processor core, or adjustment of a frequency and a voltage of a non-processor core may be performed based on this. Details are not described in this application.

### Embodiment 1

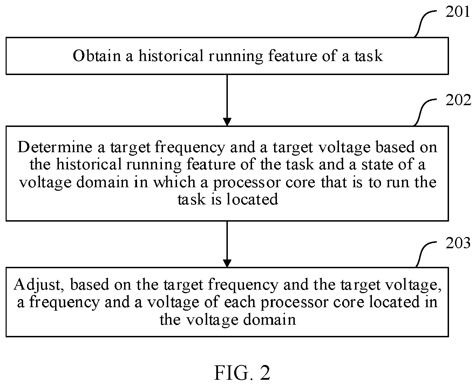

FIG. 2 is an example of a schematic flowchart corresponding to a power consumption adjustment method according to an embodiment of this application. The method is applicable to a power consumption adjustment apparatus, for example, the power consumption adjustment apparatus 100 shown in FIG. 1. As shown in FIG. 2, the method includes the following steps.

Step 201: The power consumption adjustment apparatus obtains a historical running feature of a task.

In step 201, the power consumption adjustment apparatus may obtain the historical running feature of the task when a processor core is about to start to run the task or when the processor core just starts to run the task, so as to start, as soon as possible, a frequency and voltage adjustment operation for the processor core to run the current task.

For example, the power consumption adjustment apparatus may determine, in any one of the following manners, when to obtain the historical running feature: In a possible manner, when determining to run the task, the processor core first sends an obtaining indication for the task to the power consumption adjustment apparatus, and then starts to run the task. The power consumption adjustment apparatus determines to obtain the historical running feature of the task provided that the obtaining indication for the task is received. In another possible manner, the processor core includes two parallel threads. One thread is used to run the task, and the other thread is used to report an obtaining indication for the task to the power consumption adjustment apparatus. When determining to run the task, the processor core uses the two threads to concurrently perform an operation of running the task and an operation of reporting the obtaining indication for the task. After receiving the obtaining indication for the task, the power consumption adjustment apparatus may determine to obtain the historical running feature of the task. In still another possible manner, considering that all tasks are allocated to the processor core through scheduling, the power consumption adjustment apparatus may further monitor a task scheduling status in a processor in real time, and once it is determined that a task is scheduled to a processor core, a historical running feature of the task may be immediately obtained. It should be understood that there are further many possible manners. The manners are not enumerated herein.

Further, for example, the power consumption adjustment apparatus may obtain the historical running feature of the task based on a task tag of the task. The task tag of the task is inherent attribute information attached to the task in a task generation phase. Tasks with a same task tag may be considered as tasks of a same type, for example, tasks in which a same operator is run, tasks belonging to a same computing type, or tasks executed by a same thread (related content of the task tag is described in detail in Embodiment 3, and is not described herein). A historical running feature corresponding to a task tag is determined based on state information existing when a historical task with the task tag is run in a same type of processor core, and can be used to represent a power consumption requirement existing when a task of a same type is run in the same type of processor core. The historical running feature of the task may be stored in preset storage space of the processor, and is in a one-to-one correspondence with the task tag. In this way, when the power consumption adjustment apparatus needs to obtain a historical running feature of a task, the power consumption adjustment apparatus may search the preset storage space based on a task tag of the task. If the historical running feature corresponding to the task tag of the task exists in the preset storage space, frequency and voltage adjustment are performed on the processor core based on both the historical running feature and a state of a voltage domain in which the processor core is located. If the historical running feature corresponding to the task tag of the task does not exist in the preset storage space, frequency and voltage adjustment may be performed on the processor core based on only a state of a voltage domain in which the processor core is located.

Further, for example, when the historical running feature corresponding to the task tag of the task does not exist in the preset storage space, the power consumption adjustment apparatus may further determine a current running feature of the task based on state information existing when the processor core currently runs the task, generate a correspondence between the task tag of the task and the current running feature, and add the correspondence to the preset storage space. In this way, when the processor core runs the task next time, the power consumption adjustment apparatus can obtain the current running feature from the preset storage space, to determine next power consumption adjustment based on the current running feature, to improve accuracy of next power consumption adjustment. Certainly, if the historical running feature corresponding to the task tag of the task exists in the preset storage space, the power consumption adjustment apparatus may further update the original historical running feature in the preset storage space by using the current running feature of the task, for example, directly replace the original historical running feature with the current running feature, or replace the original historical running feature with an average value or a weighted average value of the current running feature and the original historical running feature, to improve accuracy of storing the historical running feature.

It should be noted that the preset storage space in the foregoing content may be set inside the power consumption adjustment apparatus, or may be set outside the power consumption adjustment apparatus, for example, set in an external buffer or an internal memory of the processor. This is not specifically limited.

Step 202: The power consumption adjustment apparatus determines a target frequency and a target voltage based on the historical running feature of the task and a state of a voltage domain in which a processor core that is to run the task is located.

In step 202, the state of the voltage domain in which the processor core is located may include but is not limited to a current temperature of the voltage domain and current power consumption of the voltage domain. The current temperature of the voltage domain may be obtained through monitoring by using a temperature sensor (for example, T shown in FIG. 1) disposed in the voltage domain. Only one temperature sensor may be disposed in each voltage domain (for example, only one temperature sensor is disposed at a position at which it is most difficult to dissipate heat in the voltage domain, to collect a highest temperature of the voltage domain), or one temperature sensor may be disposed in each processor core in the voltage domain. When one temperature sensor is disposed in each processor core, the power consumption adjustment apparatus may use an average temperature or a highest temperature, of all the processor cores, reported by all temperature sensors as the current temperature of the voltage domain. Correspondingly, the current power consumption of the voltage domain may be obtained through monitoring by using a power consumption sensor (for example, P shown in FIG. 1) disposed in the voltage domain. Only one power consumption sensor may be disposed in each voltage domain to sense total power consumption of all processor cores in the voltage domain, or one power consumption sensor may be disposed in each processor core in the voltage domain. When one power consumption sensor is disposed in each processor core, the power consumption adjustment apparatus may use total power consumption, of all the processor cores, reported by all power consumption sensors as the current power consumption of the voltage domain.

In implementation, the power consumption adjustment apparatus may be connected to all the temperature sensors and all the power consumption sensors. In a case, the temperature sensor and the power consumption sensor may actively report a temperature and power consumption in a current cycle to the power consumption adjustment apparatus based on a preset cycle, and the power consumption adjustment apparatus stores a received temperature and received power consumption in each cycle. When frequency and voltage adjustment need to be performed on a processor core, a temperature and power consumption of a voltage domain in which the processor core is located are found from the stored temperature and power consumption for use. In another case, the power consumption adjustment apparatus may poll the temperature sensor and the power consumption sensor based on a preset cycle. After receiving a polling message, the temperature sensor and the power consumption sensor return a temperature and power consumption in a corresponding cycle to the power consumption adjustment apparatus. In still another case, the power consumption adjustment apparatus sends a request message to the temperature sensor and the power consumption sensor when necessary. After receiving the request message, the temperature sensor and the power consumption sensor send a temperature and power consumption that are collected in a time period from a time at which a previous request message is received to a time at which the current request message is received to the power consumption adjustment apparatus. It should be understood that the power consumption adjustment apparatus may further obtain the temperature and the power consumption of the voltage domain in other manners. The manners are not enumerated herein.

It should be noted that there is a specific correlation relationship between a frequency and a voltage. When the frequency needs to be increased, the voltage usually needs to be increased correspondingly. Otherwise, the frequency cannot be increased. When the frequency needs to be decreased, the voltage usually needs to be decreased correspondingly. Otherwise, electric energy is wasted. In other words, there is an approximate positive correlation relationship between a frequency and a voltage. Based on this, when the target frequency and the target voltage are determined, the target voltage may be determined together with the target frequency based on an approximate positive correlation relationship with the target frequency, or the target frequency may be first determined, and then the target voltage corresponding to the target frequency may be obtained by querying a preset approximate positive correlation relationship between a frequency and a voltage. This is not specifically limited. The following describes, by using an example in which the target frequency is first determined and then the target voltage is determined, how to determine the target frequency and the target voltage. It should be understood that if the target voltage is determined together with the target frequency, only the frequency in the following needs to be replaced with the frequency and the voltage. Details are not described in this application.

In an optional implementation, after the power consumption adjustment apparatus obtains the historical running feature of the task and the state of the voltage domain in which the processor core that is to run the task is located, the power consumption adjustment apparatus may determine, based on the state of the voltage domain, a maximum frequency (referred to as a first frequency) that can be currently supported by the voltage domain, for example, a maximum frequency that enables the temperature of the voltage domain to reach an expected temperature without exceeding a power consumption budget. The maximum frequency usually may be calculated by substituting the current power consumption, the current temperature, and a temperature variation between the current temperature and a historical temperature of the voltage domain into a proportional integral derivative (proportion integral derivative, PID) control algorithm. A proportional parameter, an integral parameter, and a derivative parameter in the PID control algorithm are obtained in advance through induction based on the expected temperature and a plurality of experiments, and are used to calculate a most appropriate frequency that can enable the temperature of the voltage domain to approach the expected temperature. In addition, the power consumption adjustment apparatus may determine, based on the historical running feature of the task, a most appropriate frequency (referred to as a second frequency) that meets a running requirement of the task. The frequency is obtained based on a historical running feature existing when the processor core runs a historical task of a same type. Therefore, the frequency can be used to represent a power consumption requirement of the task of the same type during actual running. Then, the power consumption adjustment apparatus may select a lower frequency in the first frequency and the second frequency as the target frequency, query a preset correspondence between a frequency and a voltage, and use a voltage corresponding to the target frequency as the target voltage. In this way, the target frequency determined based on this implementation cannot exceed the maximum frequency that can be currently supported by the voltage domain, can meet the running requirement of the task in the current voltage domain as much as possible, and may be considered as an optimal frequency, in the current voltage domain, suitable for running the task, and the target voltage determined based on the optimal frequency may be considered as an optimal voltage that can be used to adjust the frequency of the processor core to the optimal frequency.

Further, for example, in a running period of each task, to adjust, at a finer granularity, power consumption for running the task, the power consumption adjustment apparatus may further cyclically determine the target frequency. Specific implementations include but are not limited to the following two implementations:

In a possible manner, the power consumption adjustment apparatus may cyclically and separately determine the first frequency based on first cycle duration, cyclically and separately determine the second frequency based on second cycle duration (the second cycle duration is different from the first cycle duration), and use a lower frequency in the first frequency and the second frequency as a target frequency in shortest cycle duration. For example, when the first cycle duration is 1 ms, and the second cycle duration is 10 µs, the power consumption adjustment apparatus determines a first frequency every 1 ms, and determines a second frequency every 10 µs. After determining the first frequency in each 1 ms, the power consumption adjustment apparatus may use a lower frequency in a second frequency determined in each 10 µs in the 1 ms and the first frequency determined in the 1 ms as a frequency in next 10 µs. After the next 10 µs elapses, a new second frequency is calculated based on a historical running feature of the task in new 10 µs, and then a frequency in next 10 µs following the new 10 µs is determined based on the newly calculated second frequency and the first frequency determined in the 1 ms. After the 1 ms elapses, a new first frequency is determined based on a state of the voltage domain in the past 1 ms, and then a target frequency in each 10 µs in next 1 ms is determined based on the new first frequency. This manner is equivalent to setting independent cycle duration for the historical running feature of the task and the state of the voltage domain, to help decouple calculation processes of the two frequencies.

In addition, preferably, considering that the first frequency usually needs to be calculated by using a complex PID algorithm, it may be further set that the cycle duration corresponding to the first frequency is greater than the cycle duration corresponding to the second frequency, to reduce calculation frequency of the first frequency by using longer cycle duration and save a computing resource.

In another possible manner, the power consumption adjustment apparatus may cyclically and separately determine the first frequency and the second frequency based on same cycle duration. For example, a first frequency and a second frequency are separately determined every same 10 µs, and then a lower frequency in the first frequency and the second frequency is used as a target frequency in next 10 µs. After the next 10 µs elapses, a new first frequency is calculated based on a state of the voltage domain in new 10 µs, a new second frequency is calculated based on a historical running feature of the task in the new 10 µs, and a lower frequency is used as a target frequency in next 10 µs following the new 10 µs In this manner, same cycle duration is set for the historical running feature of the task and the state of the voltage domain, to help ensure that a frequency in each next cycle is determined based on a latest state of the voltage domain and a latest historical working feature, to help further improve accuracy of the target frequency.

Step 203: The power consumption adjustment apparatus adjusts, based on the target frequency and the target voltage, a frequency and a voltage of each processor core located in the voltage domain.

For example, as still shown in FIG. 1, if the voltage domain is CPU 1, the power consumption adjustment apparatus 100 may send a frequency and voltage adjustment indication message carrying the target frequency and the target voltage to a frequency and voltage adjustment execution unit N1 connected to the voltage domain CPU1. After receiving the frequency and voltage adjustment indication message, the frequency and voltage adjustment execution unit N1 may directly adjust working frequencies and working voltages of all processor cores in the voltage domain CPU1 to the target frequency and the target voltage in one time, to improve efficiency of frequency and voltage adjustment, or may slowly adjust working frequencies and working voltages of all processor cores in the voltage domain CPU 1 to the target frequency and the target voltage in a plurality of times in a manner such as step adjustment or continuous adjustment, to improve stability of frequency and voltage adjustment.

In Embodiment 1, the historical running feature of the task can represent a power consumption requirement existing when the task is run in a real environment, and the state of the voltage domain in which the processor core that is to run the task is located can represent a power consumption configuration that can be supported by the voltage domain. Therefore, frequency and voltage adjustment are performed based on the historical running feature of the task and the state of the voltage domain, to help select a frequency and a voltage that are suitable for a current running requirement of the task from a power consumption configuration currently supported by the voltage domain to run the task, to effectively improve accuracy of frequency and voltage adjustment. In addition, the task is run based on the frequency and the voltage that are suitable for the task, and therefore a task processing capability of the processor is improved.

In an optional implementation, the historical running feature of the task may include a historical memory access bottleneck degree, a historical computing bottleneck degree, and a historical input/output (input/output, I/O) bottleneck degree. The historical memory access bottleneck degree is calculated based on a value, in a case of a preset running indicator, of a memory access instruction (for example, may include a last level cache (last level cache, LLC) access instruction, a double data rate (double data rate, DDR) access instruction, a high bandwidth memory (high bandwidth memory, HBM) access instruction, and an external memory access instruction) existing when the processor core runs the historical task. The historical computing bottleneck degree is calculated based on a value, in a case of the preset running indicator, of a computing instruction existing when the processor core runs the historical task. The historical I/O bottleneck degree is calculated based on a value, in a case of the preset running indicator, of an I/O instruction existing when the processor core runs the historical task. The preset running indicator may include but is not limited to a performance counter used when hardware executes the instruction, a quantity of uncompleted instructions (for example, "outstanding" instructions) sent to an off-chip memory (for example, a double data rate synchronous dynamic random access memory (double data rate synchronous dynamic random access memory, DDR SDRAM)), a cache hit rate of the instruction, a ratio of an execution time of the computing instruction to a total running time of the task, a ratio of an execution time of the memory access instruction to the total running time of the task, a ratio of the execution time of the computing instruction to the execution time of the memory access instruction, a ratio of a blocking time of the instruction to the total running time of the task, and the like. Certainly, some other indicators may be further included, for example, total power consumed for running the task, a highest temperature in a task running process, a task running frequency, I/O requests per second (input/output per second, IOPS), a request response time, a throughput, and usage of various types of space (including but not limited to a capacity, a usage amount, a remaining amount, a usage rate, and an availability rate of storage space, cache space, and an index node).

In the foregoing implementation, values of various instructions in a case of each preset running indicator may be calculated by the power consumption adjustment apparatus based on state information existing when the processor core runs a historical task with the same task tag. The state information includes but is not limited to a total quantity of cycles in which the processor core executes an instruction and a quantity of instructions, a quantity of cycles in which the processor executes the computing instruction and a quantity of instructions, a quantity of cycles in which the processor executes the memory access instruction and a quantity of instructions, a quantity of cycles in which the processor is blocked due to the memory access instruction, and the like. The state information may be stored inside the processor core, or may be stored outside the processor core, and has unique storage space. In addition, the state information may be actively reported by the processor core to the power consumption adjustment apparatus after running of the task ends, or may be obtained by the power consumption adjustment apparatus by actively reading storage space corresponding to the processor core after detecting that running of the task ends. This is not specifically limited.

For example, if the historical running feature includes the historical memory access bottleneck degree, the power consumption adjustment apparatus may further monitor a task running status in each processor core in real time. Once it is determined that running of the task is completed, the state information existing in a process of running the task by the processor core may be obtained, then a value of a memory access instruction in the task in a case of each preset running indicator is calculated based on the state information, and then an average value or a weighted average value of values of the memory access instruction in a case of all the preset running indicators is used as the historical memory access bottleneck degree, and is stored in preset storage space. When the historical memory access bottleneck degree is calculated in a weighted average manner, a weight of each preset running indicator may be set in the following manner: When the performance counter used when the hardware executes the memory access instruction is larger, the quantity of uncompleted memory access instructions sent to the off-chip memory is larger, or the cache hit rate is smaller, it means that more times of off-chip access are required, an overall delay required for the memory access instruction is higher, and there is a higher probability that a memory access bottleneck exists in the task. That is, there is a positive correlation relationship between the historical memory access bottleneck degree and each of the performance counter used when the hardware executes the memory access instruction and the quantity of uncompleted memory access instructions sent to the off-chip memory, weights of the performance counter used when the hardware executes the memory access instruction and the quantity of uncompleted memory access instructions sent to the off-chip memory may be set to positive values based on the positive correlation relationship, there is a negative correlation relationship between the cache hit rate and the historical memory access bottleneck degree, and a weight of the cache hit rate may be set to a negative value based on the negative correlation relationship. When the ratio of the execution time of the memory access instruction to the total running time of the task is larger, the ratio of the execution time of the computing instruction to the total running time of the task is smaller, a ratio of the execution time of the memory access instruction to the execution time of the computing instruction is larger, the ratio of the blocking time of the memory access instruction to the total running time of the task is larger, or the ratio of the execution time of the computing instruction to the total running time of the task is smaller, it means that the processor may be in a blocked state for a longer time due to waiting for data access, and there is a higher possibility that a memory access bottleneck exists in the task. That is, there is a positive correlation relationship between the historical memory access bottleneck degree and each of the ratio of the execution time of the memory access instruction to the total running time of the task, the ratio of the execution time of the memory access instruction to the execution time of the computing instruction, and the ratio of the blocking time of the memory access instruction to the total running time of the task, weights of the ratio of the execution time of the memory access instruction to the total running time of the task, the ratio of the execution time of the memory access instruction to the execution time of the computing instruction, and the ratio of the blocking time of the memory access instruction to the total running time of the task may be set to positive values based on the positive correlation relationship, there is a negative correlation relationship between the ratio of the execution time of the computing instruction to the total running time of the task and the historical memory access bottleneck degree, and a weight of the ratio of the execution time of the computing instruction to the total running time of the task may be set to a negative value based on the negative correlation relationship.

The following further describes specific implementation of the power consumption adjustment method based on Embodiment 2 by using an example in which the historical running feature includes the historical memory access bottleneck degree.

### Embodiment 2

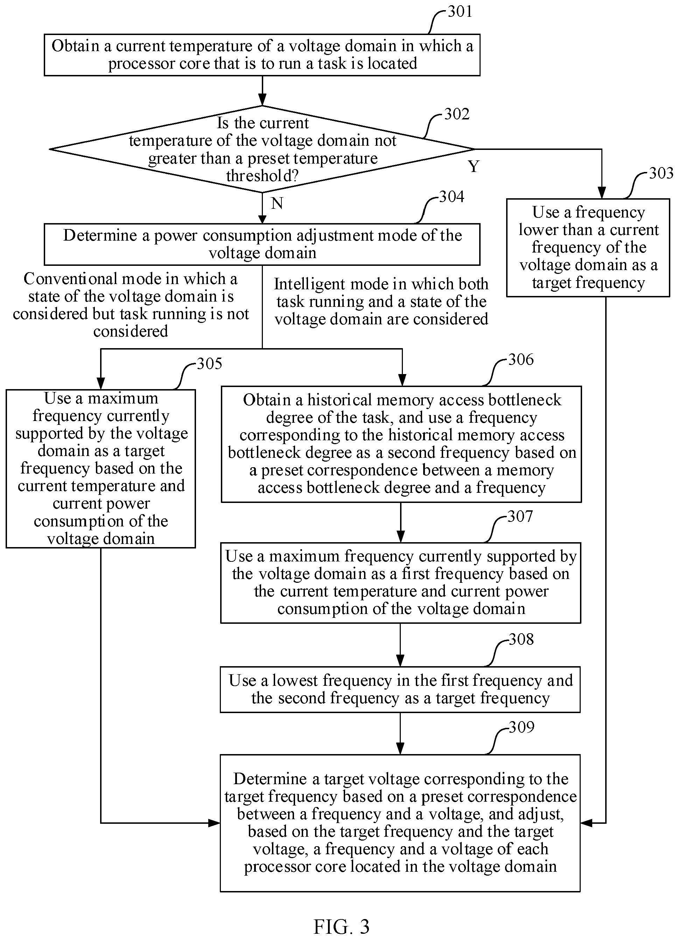

FIG. 3 is an example of a schematic flowchart of a power consumption adjustment method according to an embodiment of this application. The method is applicable to a power consumption adjustment apparatus, for example, the power consumption adjustment apparatus 100 shown in FIG. 1. As shown in FIG. 3, the method includes the following steps.

Step 301: The power consumption adjustment apparatus obtains a current temperature of a voltage domain in which a processor core that is to run a task is located.

In step 301, if one temperature sensor is disposed in each processor core, after receiving temperatures of all the processor cores reported by all temperature sensors, the power consumption adjustment apparatus may use an average temperature of the temperatures of all the processor cores as the current temperature of the voltage domain, to determine a subsequent frequency and voltage adjustment operation based on the average temperature of all the processor cores, and keep overall power consumption of the voltage domain within a safe range as much as possible.

Step 302: The power consumption adjustment apparatus determines whether the current temperature of the voltage domain is not less than a preset temperature threshold. If the current temperature of the voltage domain is not less than the preset temperature threshold, step 303 is performed. If the current temperature of the voltage domain is less than the preset temperature threshold, step 304 is performed.

In step 302, the preset temperature threshold is used to represent whether there is available power in the voltage domain. When the current temperature of the voltage domain is not less than the preset temperature threshold, it means that all power in the voltage domain is used, and currently no additional power can be provided to the processor core. In this case, the power consumption adjustment apparatus may no longer perform frequency and voltage adjustment for the voltage domain, to reduce an unnecessary resource waste. When the current temperature of the voltage domain is less than the preset temperature threshold, it means that there is still some unused power in the voltage domain. In this case, the power consumption adjustment apparatus may select a most appropriate frequency that meets a running requirement of the task from a frequency range that can be supported by the voltage domain, to fully use a junction temperature and power headroom of the voltage domain, and improve a task processing capability of the processor core as much as possible. It may be learned that in this manner, a computing resource can be effectively used while necessary power consumption adjustment is implemented. This helps improve properness and accuracy of power consumption adjustment.

Step 303: The power consumption adjustment apparatus uses a frequency lower than a current frequency of the voltage domain as a target frequency, and then performs step 309.

In step 303, when the current temperature of the voltage domain is high, the voltage domain may be in a high-voltage and high-frequency working state for a long time, and consequently heat dissipation of the processor core in the voltage domain is not performed in a timely manner. In this case, a frequency lower than the current frequency of the voltage domain is used as the target frequency, so that the temperature can be decreased by performing a subsequent frequency and voltage decrease operation, to improve security of the processor core in the voltage domain.

Step 304: The power consumption adjustment apparatus determines a power consumption adjustment mode of the voltage domain.

When a conventional mode in which a state of the voltage domain is considered but task running is not considered is used, step 305 is performed.

When an intelligent mode in which both task running and a state of the voltage domain are considered is used, step 306 is performed.

In step 304, the power consumption adjustment mode of the voltage domain may be preset in an inherent configuration of a processor by a worker before the processor is delivered from a factory, or may be provided by a user to a processor through input by using software after the processor is delivered from a factory, to make a configuration. Voltage domains in the processor may have a same power consumption adjustment mode, or may have respective independent power consumption adjustment modes. When there are respective independent power consumption adjustment modes, power consumption adjustment modes of different voltage domains in a same time period may be the same or different. This is not specifically limited.

For example, considering that more power is consumed in the intelligent mode than in the conventional mode, in a possible manner, both the conventional mode and the intelligent mode may be set in the processor, but it is considered by default that the conventional mode is enabled and the intelligent mode is disabled. When a voltage domain requires more refined power consumption adjustment, an intelligent mode of the voltage domain is temporarily enabled by using software, and a conventional mode of another voltage domain is maintained. After a period of time or after the processor is restarted, a conventional mode of each voltage domain is automatically restored. In this way, in this manner, not only the intelligent mode with high power consumption can be used for a voltage domain that requires finer-grained adjustment, but also the conventional mode with low power consumption can be used for a voltage domain that does not require finer-grained adjustment. This helps implement fine adjustment and reduce power consumption.

Step 305: The power consumption adjustment apparatus uses, based on the current temperature and current power consumption of the voltage domain, a maximum frequency currently supported by the voltage domain as a target frequency.

In step 304 and step 305, when the voltage domain uses the conventional mode in which the state of the voltage domain is considered but task running is not considered, the processor core in the voltage domain may be running a task that requires high performance. In this case, the maximum frequency that can be supported by the voltage domain is configured for the processor core based on the current temperature and a current function of the voltage domain, to help the processor core maximize all available power in the voltage domain, to improve a task processing capability and processing efficiency.

Step 306: The power consumption adjustment apparatus obtains a historical memory access bottleneck degree of the task, and uses a frequency corresponding to the historical memory access bottleneck degree as a second frequency based on a preset correspondence between a memory access bottleneck degree and a frequency.

For example, a smaller historical memory access bottleneck degree of the task means that historical running of a memory access instruction in the processor core is more likely to be blocked or paused, and it is more likely that a memory access bottleneck exists when the processor core runs a same task. That is, the processor core may be in a waiting state for a long time in a process of running the same task, and the task actually has a low requirement for power consumption. Therefore, the power consumption adjustment apparatus may configure a low second frequency for the task, provided that it is ensured, by using the low second frequency, that power consumption is sufficient. In this way, energy efficiency is not reduced, and a waste of power consumption can be avoided as much as possible. A larger historical memory access bottleneck degree of the task means that historical running of a memory access instruction in the processor core is smoother, and it is less likely that a memory access bottleneck exists when the processor core runs a same task. That is, in a process of running the same task, the processor core processes the task for most of time and basically does not wait, and the task has a high requirement for power consumption. Therefore, the power consumption adjustment apparatus may configure a high second frequency for the task, to provide high power consumption required for running the task, to ensure smooth running of the task. It may be learned that in this example, the second frequency corresponding to the historical memory access bottleneck degree is actually set based on an approximate positive correlation relationship between a frequency and a memory access bottleneck degree. This helps ensure that the determined second frequency can match the memory access bottleneck degree of the current task, and can achieve high energy efficiency.

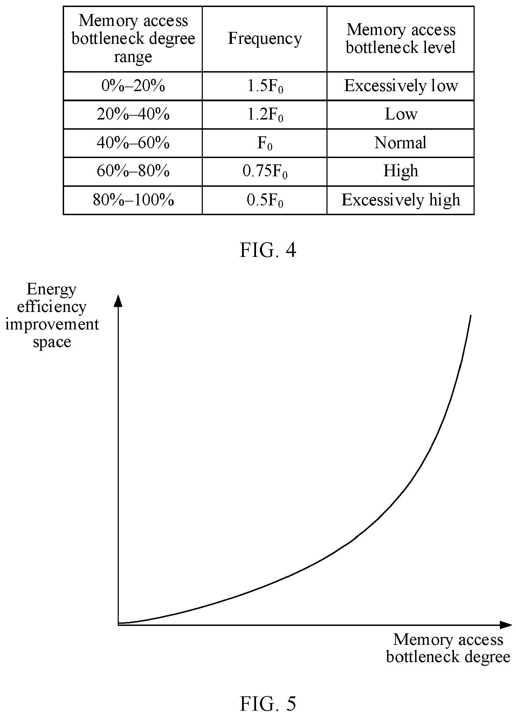

Further, for example, the approximate positive correlation relationship between a memory access bottleneck degree and a frequency may be set by a person skilled in the art based on experience, or may be a continuous or discontinuous expression obtained by training experimental data by using a machine learning algorithm. This is not specifically limited. An expression is used as an example. When the expression is a continuous expression, different historical memory access bottleneck degrees may correspond to different second frequencies, and a larger historical memory access bottleneck degree indicates a higher second frequency that may be calculated by substituting the historical memory access bottleneck degree into the expression. When the expression is a discontinuous expression, FIG. 4 is an example of a diagram of a preset correspondence between a memory access bottleneck degree and a frequency according to an embodiment of this application. As shown in FIG. 4, in this example, the memory access bottleneck degree is divided into different memory access bottleneck degree ranges (also referred to as memory access bottleneck degree waterlines) based on different value ranges of the memory access bottleneck degree. Each memory access bottleneck degree range corresponds to one frequency, and may further correspond to one memory access bottleneck level, to represent a degree of impact of a memory access bottleneck when the processor core runs the task. The frequency in the correspondence may be represented by a frequency change ratio shown in FIG. 4, or may be a specific frequency value. When the frequency change ratio is used for representation, the frequency change ratio may be relative to a reference frequency, or may be relative to a current frequency. This is not specifically limited.

If the frequency change ratio shown in FIG. 4 is relative to the current frequency F₀, in this example, the following five access bottleneck degree ranges are included: a memory access bottleneck degree range of 0%-20%, where the range corresponds to a frequency of 1.5F₀ and corresponds to an excessively low memory access bottleneck level, that is, a memory access bottleneck basically does not exist in a running process of the task; a memory access bottleneck degree range of 20%-40%, where the range corresponds to a frequency of 1.2F₀ and corresponds to a low memory access bottleneck level, that is, a memory access bottleneck exists in a running process of the task but is not severe; a memory access bottleneck degree range of 40%-60%, where the range corresponds to a frequency of F₀ and corresponds to a normal memory access bottleneck level, that is, a memory access bottleneck exists in a running process of the task; a memory access bottleneck degree range of 60%-80%, where the range corresponds to a frequency of 0.75F₀ and corresponds to a high memory access bottleneck level, that is, a severe memory access bottleneck exists in a running process of the task; and a memory access bottleneck degree range of 80%-100%, where the range corresponds to a frequency of 0.5F₀ and corresponds to an excessively high memory access bottleneck level, that is, a very severe memory access bottleneck exists in a running process of the task. Based on this example, if the historical memory access bottleneck degree of the task is 35%, the power consumption adjustment apparatus may first query, based on the historical memory access bottleneck degree 35%, the five memory access bottleneck degree ranges shown in FIG. 4, and determine that the historical memory access bottleneck degree 35% belongs to the memory access bottleneck degree range of 20%-40%. Therefore, the power consumption adjustment apparatus may use the frequency 1.5F₀ corresponding to the memory access bottleneck degree range of 20%-40% as the second frequency.

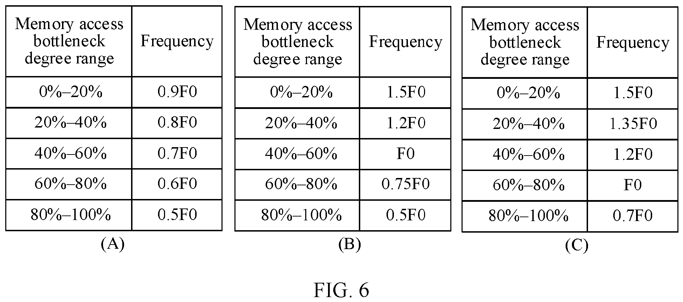

It should be noted that when the preset correspondence between a memory access bottleneck degree and a frequency is configured, different configurations may be made based on different requirements for an energy efficiency priority or performance priority. FIG. 5 is an example of a diagram of a correspondence between a memory access bottleneck degree and energy efficiency improvement space. As shown in FIG. 5, there is a positive correlation relationship between the memory access bottleneck degree and the energy efficiency improvement space. That is, provided that there is a memory access bottleneck degree, there is energy efficiency that can be improved in the processor core, and a larger memory access bottleneck degree indicates a larger degree to which the energy efficiency can be improved. Based on the positive correlation relationship between a memory access bottleneck degree and energy efficiency improvement space shown in FIG. 5, in a possible configuration manner, FIG. 6 is an example of a diagram of preset correspondences between a memory access bottleneck degree and a frequency in a case of different requirements according to an embodiment of this application.

In FIG. 6, (A) shows a preset correspondence that is between a memory access bottleneck degree and a frequency and that is configured when only an energy efficiency requirement is considered. As shown in (A) in FIG. 6, considering that provided that there is a memory access bottleneck degree, there is energy efficiency that can be improved, a frequency change ratio corresponding to each access bottleneck degree range may be set to a value less than 1, so that in any case in which there is a memory access bottleneck degree, energy efficiency can be improved by decreasing a frequency. In addition, considering that the energy efficiency that can be improved increases with the memory access bottleneck degree, it may be further set that the frequency decreases with the memory access bottleneck degree. In this way, as the memory access bottleneck degree increases, the frequency gradually decreases. This means that utilization of power consumption existing after the frequency is decreased gradually increases, and a decreased frequency can match, as much as possible, energy efficiency that can be improved and that corresponds to an increased memory access bottleneck degree, to help maximize energy efficiency improvement.

In FIG. 6, (B) shows a preset correspondence that is between a memory access bottleneck degree and a frequency and that is configured when both an energy efficiency requirement and a performance requirement are considered. As shown in (B) in FIG. 6, in the correspondence, there is a frequency change ratio that is less than 1, and there is a frequency change ratio that is greater than 1. That is, although there is a memory access bottleneck degree, provided that the historical memory access bottleneck degree does not exceed a maximum memory access bottleneck degree in a critical memory access bottleneck degree range (for example, 40%-60% shown in (B) in FIG. 6), a frequency of the processor core can still be increased, so that the processor core with an increased frequency can further perform some other operations in a waiting period of the memory access bottleneck to improve performance of the processor core. This improves performance while improving energy efficiency.

Further, in a configuration solution in which both the energy efficiency requirement and the performance requirement are considered, the critical memory access bottleneck degree range may be set based on a requirement to which more attention is paid. For example, in FIG. 6, (C) shows another preset correspondence that is between a memory access bottleneck degree and a frequency and that is configured when both the energy efficiency requirement and the performance requirement are considered. With reference to (B) in FIG. 6 and (C) in FIG. 6, in a configuration provided in (B) in FIG. 6, when the historical memory access bottleneck degree reaches more than 60%, the frequency of the processor core starts to be decreased, and in a configuration provided in (C) in FIG. 6, when the historical memory access bottleneck degree reaches more than 60% but does not reach 80%, the frequency of the processor core is not decreased, and the frequency of the processor core is decreased only when 80% is reached. It may be learned that a larger critical memory access bottleneck degree range (namely, 60%-80%) is set in (C) in FIG. 6. Even if the historical memory access bottleneck reaches the critical memory access bottleneck degree range of 40%-60% provided in (B) in FIG. 6, the frequency is not decreased, and the processor core continues to work at a previous high frequency. Therefore, higher performance is achieved in the configuration provided in (C) in FIG. 6 than in the configuration provided in (B) in FIG. 6. That is, the configuration provided in (C) in FIG. 6 is more performanceoriented than the configuration provided in (B) in FIG. 6, and is a policy in which performance is prioritized.

It should be noted that in (A) in FIG. 6 to (C) in FIG. 6, frequencies corresponding to different memory access bottleneck degree ranges are set by using a same interval granularity of the access bottleneck degree range. This is merely an optional implementation. It should be understood that in another optional implementation, interval granularities of memory access bottleneck degree ranges configured for different requirements may be different. For example, when only an energy efficiency requirement is considered, because adjustment is performed by decreasing a frequency, and it is found in actual experience that the adjustment performed by decreasing a frequency actually imposes little impact on energy efficiency improvement, a large interval granularity, for example, 50%, may be correspondingly set for the memory access bottleneck degree range. In this case, an entire memory access bottleneck degree may be divided into two memory access bottleneck degree ranges: 0%-50% and 50%-100%, to implement coarse adjustment at two levels. However, when both an energy efficiency requirement and a performance requirement are considered, each frequency change imposes large impact on energy efficiency and performance. Therefore, a small interval granularity, for example, 10%, may be correspondingly set for the memory access bottleneck degree range. In this case, an entire memory access bottleneck degree may be divided into 10 memory access bottleneck degree ranges: 0%-10%, 10%-20%, ..., 80%-90%, and 90%-100%, to further reduce a granularity of increasing and decreasing a frequency.

Further, for example, the preset correspondence between a memory access bottleneck degree and a frequency may be further dynamically adjusted. The dynamic adjustment includes but is not limited to adjusting only the memory access bottleneck degree range in the correspondence, adjusting only the frequency in the correspondence, and adjusting both the memory access bottleneck degree range and the frequency in the correspondence. For example, the following describes two possible dynamic adjustment solutions:

In a dynamic adjustment solution, the power consumption adjustment apparatus may further collect statistics on memory access bottleneck degree ranges to which a plurality of historical memory access bottleneck degrees existing when a task is previously executed respectively belong. If the plurality of historical memory access bottleneck degrees basically belong to one or several adjacent memory access bottleneck degree ranges (it is assumed that the plurality of historical memory access bottleneck degrees belong to the memory access bottleneck degree range of 20%-40% shown in FIG. 4), it indicates that a same task is repeatedly executed in a current scenario, and most second frequencies are concentrated in the memory access bottleneck degree range of 20%-40%. In this case, the power consumption adjustment apparatus may further subdivide the concentrated memory access bottleneck degree range of 20%-40%, for example, further obtain the following five memory access bottleneck degree ranges with a finer interval granularity through subdivision: 20%-24%, 24%-28%, 28%-32%, 32%-36%, and 36%-40%. Another memory access bottleneck degree range may be deleted or retained. This is not limited. Then, because a new memory access bottleneck degree range is obtained through subdivision, the power consumption adjustment apparatus may further select five frequencies (for example, 1.4F₀, 1.35F₀, 1.25F₀, 1.2F₀, and 1.1F₀) around the frequency 1.2F₀ corresponding to the memory access bottleneck degree range of 20%-40%, and then allocate the five frequencies to the five memory access bottleneck degree ranges with a finer interval granularity, so that when the task is repeatedly executed next time, a second frequency suitable for the task can be determined based on the five memory access bottleneck degree ranges with a finer interval granularity that are obtained through subdivision and the frequencies that are obtained through subdivision and that correspond to the five memory access bottleneck degree ranges with a finer interval granularity, to further improve accuracy of the second frequency. Certainly, in another simpler solution, the five newly calculated memory access bottleneck degree ranges with a finer granularity may be directly used to cover the five original memory access bottleneck degree ranges, that is, the five frequencies (namely, 1. 5F₀, 1.2F₀, F₀, 0.75F₀, and 0.5F₀) corresponding to the five original access bottleneck degree ranges are directly allocated to the five newly calculated memory access bottleneck degree ranges of 20%-24%, 24%-28%, 28%-32%, 32%-36%, and 36%-40%, and no new frequency needs to be set, to further simplify a calculation procedure.

In another dynamic adjustment solution, if a configuration manner in which a performance requirement is considered is used, the power consumption adjustment apparatus may further monitor the current temperature of the voltage domain in real time each time after the frequency of the voltage domain is adjusted by using the second frequency. If a specific difference still exists between the current temperature of the voltage domain and an expected temperature after a period of time, it indicates that the power headroom of the voltage domain cannot be fully used by using the currently used second frequency, and the second frequency is set to be excessively low. In this case, the power consumption adjustment apparatus may uniformly increase the frequencies corresponding to the access bottleneck degree ranges, so that the remaining power headroom of the voltage domain can be subsequently fully used based on the uniformly increased frequencies, to effectively provide performance of the processor core. On the contrary, if a difference between the current temperature of the voltage domain and an expected temperature is not large or even the current temperature of the voltage domain exceeds an expected temperature after a period of time, it indicates that the currently used second frequency is about to go beyond or has gone beyond a frequency range supported by the power headroom of the voltage domain, and the second frequency is set to be excessively high. In this case, the power consumption adjustment apparatus may uniformly decrease the frequencies corresponding to the access bottleneck degree ranges, so that a frequency and voltage decrease operation can be subsequently performed on the voltage domain based on the uniformly decreased frequencies, to maintain security of the processor core through cooling.

It should be understood that in the foregoing content, the two possible dynamic adjustment solutions are merely described as examples. However, in a specific operation, another dynamic adjustment solution may be used to adjust the access bottleneck degree range and the frequency. This is not limited in this application.

It should be noted that step 306 is described only by using an example in which a historical running feature includes the historical memory access bottleneck degree but does not include another historical bottleneck degree (namely, a historical computing bottleneck degree and/or a historical I/O bottleneck degree). When the historical running feature includes at least two of the historical memory access bottleneck degree, the historical computing bottleneck degree, and the historical I/O bottleneck degree, the power consumption adjustment apparatus may further separately calculate a second frequency corresponding to each historical bottleneck degree in the manner in step 306, and then select a lowest second frequency as a final second frequency, to select, on a basis of comprehensively considering all bottlenecks that may exist in task running, a second frequency that can meet requirements of all the bottlenecks.

In addition, in step 306, the second frequency is determined by using the memory access bottleneck degree as an example. This is merely an optional implementation. In another optional implementation, the power consumption adjustment apparatus may no longer calculate the memory access bottleneck degree, but directly determine, based on a value of a memory access instruction in a case of each running indicator, whether a memory access bottleneck exists. Specific implementation includes: The power consumption adjustment apparatus presets a determining threshold corresponding to each preset running indicator. After the value of the memory access instruction in a case of each preset running indicator is calculated, if all of a performance counter used when hardware executes the memory access instruction, a quantity of uncompleted memory access instructions sent to an off-chip memory, a ratio of an execution time of the memory access instruction to a total running time of the task, a ratio of the execution time of the memory access instruction to an execution time of a computing instruction, and a ratio of a blocking time of the memory access instruction to the total running time of the task are greater than respective corresponding determining thresholds, and neither of a cache hit rate of the memory access instruction and a ratio of the execution time of the computing instruction to the total running time of the task is greater than respective corresponding determining thresholds, it is determined that a memory access bottleneck exists in a historical running process of the task. Therefore, the power consumption adjustment apparatus may set a low second frequency. If none of a performance counter used when hardware executes the memory access instruction, a quantity of uncompleted memory access instructions sent to an off-chip memory, a ratio of an execution time of the memory access instruction to a total running time of the task, a ratio of the execution time of the memory access instruction to an execution time of a computing instruction, and a ratio of a blocking time of the memory access instruction to the total running time of the task is not greater than respective corresponding determining thresholds, and both a cache hit rate of the memory access instruction and a ratio of the execution time of the computing instruction to the total running time of the task are greater than respective corresponding determining thresholds, it is determined that no memory access bottleneck exists in a historical running process of the task. Therefore, the power consumption adjustment apparatus may set a high second frequency. In this manner, the second frequency can be quickly determined by performing only a determining operation, and a specific calculation operation may no longer be performed. This helps improve efficiency of determining the second frequency.

Step 307: The power consumption adjustment apparatus uses, based on the current temperature and current power consumption of the voltage domain, a maximum frequency currently supported by the voltage domain as a first frequency.

Step 308: The power consumption adjustment apparatus uses a lower frequency in the first frequency and the second frequency as a target frequency.

In step 306 to step 308, the lower frequency is used as the target frequency, so that the target frequency cannot exceed the maximum frequency currently supported by the voltage domain, and can meet a running requirement of the task in the current voltage domain as much as possible. There is a high probability that the target frequency is an optimal frequency, in the current voltage domain, suitable for running the task.

Step 309: The power consumption adjustment apparatus determines a target voltage corresponding to the target frequency based on a preset correspondence between a frequency and a voltage, and adjusts, based on the target frequency and the target voltage, a frequency and a voltage of each processor core located in the voltage domain.

In step 309, the preset correspondence between a frequency and a voltage may be set by a person skilled in the art based on experience. For example, a correspondence table between a frequency and a voltage may be preset in the processor before the processor is delivered from a factory. Each time after the target frequency is determined, the power consumption adjustment apparatus may query the correspondence table to determine the corresponding target voltage, and then complete a frequency and voltage adjustment operation on the processor core based on the target frequency and the target voltage.

In Embodiment 2, the target frequency and the target voltage are determined based on the memory access bottleneck degree of the task in the historical running process, so that when a task with a large memory access bottleneck degree is run, a low frequency can be selected, to reduce a waste of power consumption as much as possible while meeting a running requirement of the task, to improve energy efficiency, and when a task with a small memory access bottleneck degree is run, a high frequency can be selected, to improve performance of the processor core on a basis of meeting high power consumption required for running the task, to improve performance. That is, in the solution in Embodiment 2, both high energy efficiency and high performance of the processor core can be considered. In addition, the intelligent mode and the conventional mode that can be selected by the user are preset, so that the user can be further supported in selecting, based on an actual requirement, a mode most suitable for a current scenario. This is effectively compatible with various processor scenarios, and improves accuracy and flexibility of performing frequency and voltage adjustment in each scenario. Furthermore, compatibility between the two modes of the intelligent mode and the conventional mode is achieved, so that corresponding logic of the intelligent mode can be further added to a processor that uses the conventional mode, to update the processor, and there is no need to modify the inherent conventional mode or add an additional device, to further help implement direct integration into an existing processor, and reduce design costs of the processor

In an optional implementation, as still shown in FIG. 1, the power consumption adjustment apparatus 100 may include a task scheduling unit 110 and a frequency and voltage adjustment control unit 120. The task scheduling unit 110 is configured to schedule a task to a corresponding processor core. The frequency and voltage adjustment control unit 120 is configured to flexibly configure a frequency and a voltage of the processor core based on a historical running feature of the task and a state of a voltage domain in which the processor core that is to run the task is located. The following describes further implementation of the power consumption adjustment solutions based on Embodiment 3 from a perspective of information interaction between the task scheduling unit 110 and the frequency and voltage adjustment execution unit 120.

### Embodiment 3

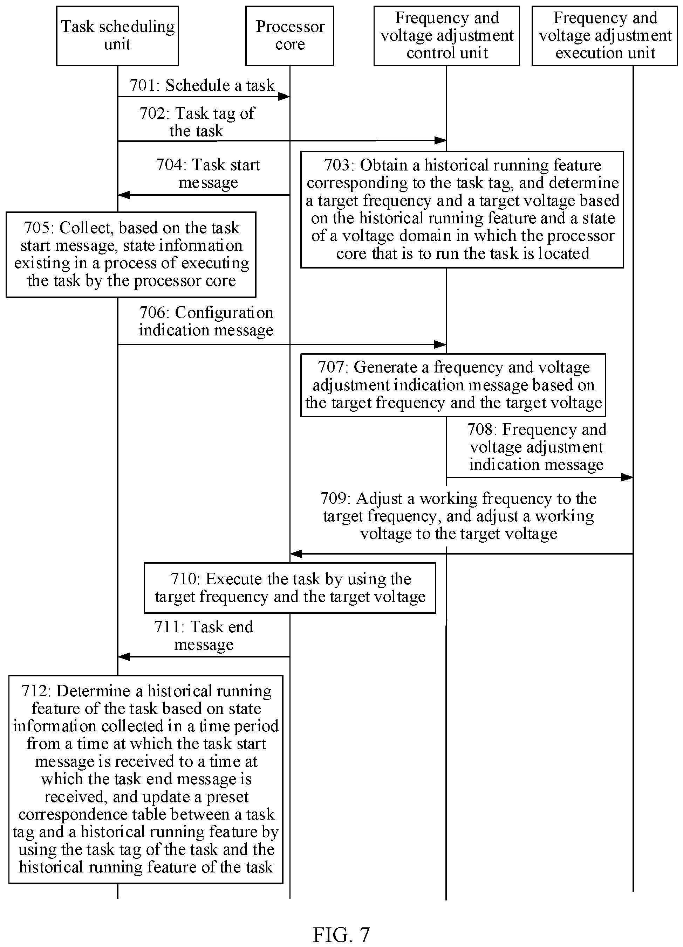

FIG. 7 is an example of a schematic diagram of an interaction procedure in a power consumption adjustment method according to an embodiment of this application. The method is applicable to a task scheduling unit, a processor core, a frequency and voltage adjustment control unit, and a frequency and voltage adjustment execution unit, for example, the task scheduling unit 110, the processor core that is to run a task, the frequency and voltage adjustment control unit 120, and the frequency and voltage adjustment execution unit connected to the processor core that is to run a task that are shown in FIG. 1. As shown in FIG. 7, the method includes the following steps.

Step 701: The task scheduling unit schedules a task to a corresponding processor core.

For example, as still shown in FIG. 1, the task scheduling unit 110 may include an arbitration unit 111 and at least one task queue, for example, a task queue 0, a task queue 1, a task queue 2, and a task queue 3. Each of the at least one task queue may include one or more to-be-scheduled tasks and related information of the one or more to-be-scheduled tasks. Related information of each to-be-scheduled task may include but is not limited to a task name, a task tag, an identifier of a processor core that is to run the task, implementation code of the task, some configuration information that supports running of the implementation code, a configuration parameter, and the like. Certainly, some other implementation details of the to-be-scheduled task may be further included, for example, a priority of the task, an execution time period of the task, a dependency relationship of the task, and a sensitivity level of the task to a delay. This is not specifically limited.

In implementation, the arbitration unit 111 may select a task to be executed at a next moment from each task queue based on a plurality of preset factors, parse related information of the task to obtain an identifier of a processor core that is to run the task, and then send the related information of the task to the processor core based on the identifier when determining that the processor core is idle, to schedule the task to the processor core. Certainly, if the processor core is not idle, the arbitration unit 111 may further wait for the processor core to complete execution of a current task, and then send the related information of the task to be executed at the next moment to the processor core. The plurality of preset factors may include but are not limited to a priority of a task, an execution time period of the task, a dependency relationship of the task, and a sensitivity level of the task to a delay. There are many manners of determining, based on these factors, the task to be executed at the next moment. For example, in a possible manner, if there is a task A₂ in the task queue, and a dependency relationship of the task A₂ indicates that the task A₂ needs to be immediately executed after execution of a task A₁ is completed, after detecting that execution of the task A₁ is completed, the arbitration unit 111 may immediately use the task A₂ as the task to be executed at the next moment. In another possible manner, if there is a task B₁ and a task B₂ in the task queue, a sensitivity level of the task B₁ to a delay is low, and a sensitivity level of the task B₂ to a delay is high, it indicates that the task B₁ can tolerate a long delay, but the task B₂ has a high requirement on a time limit, and needs to be executed as soon as possible. Therefore, the arbitration unit 111 may use the task B₂ as the task to be executed at the next moment. In still another possible manner, if there is a task C₁, a task C₂, and a task C₃ whose priorities sequentially decrease in the task queue, the arbitration unit 111 may use the task C, with a highest priority as the task to be executed at the next moment. In yet another possible manner, the arbitration unit 111 may separately calculate an average value or a weighted average value of each task in a case of the plurality of factors, and then select a task with a largest average value or weighted average value as the task to be executed at the next moment, to comprehensively consider various factors to determine a scheduling sequence of tasks, to improve accuracy of task scheduling. It should be understood that there are further many possible manners of determining the scheduling sequence. The manners are not enumerated herein.

It should be noted that in the related information of the task, the identifier of the processor core that is to run the task is optional information, and the related information may not include the identifier of the processor core that is to run the task. In this case, each time after a to-be-scheduled task is selected from the task queue, the arbitration unit 111 may further select, from processor cores, a processor core that is most idle and that can support running of implementation code of the task as a target processor core corresponding to the task, and schedule the task to the target processor core. Alternatively, the related information may further include a type (for example, a CPU) of the processor core that is to run the task, but does not include the identifier of the processor core that is to run the task. In this case, the arbitration unit 111 may further select an idle processor core from processor cores of the type as a target processor core corresponding to the task, and schedule the task to the target processor core.

It should be noted that in FIG. 1, an example in which the task queue is stored inside the task scheduling unit is merely used for description. In another example, the task queue may be stored outside the task scheduling unit, for example, may be stored in the external buffer or the internal memory shown in FIG. 1. This is not specifically limited. In addition, the task to be executed at the next moment may include only one task, or may include a plurality of tasks. When a plurality of tasks are included, the plurality of tasks may be respectively scheduled to different processor cores for parallel processing, or may be scheduled to a same processor core, and are sequentially executed in the processor core. This is not specifically limited.

Step 702: The task scheduling unit sends a task tag of the task to the frequency and voltage adjustment control unit.

In step 702, the task scheduling unit may obtain the task tag of the task by parsing related information of the task stored in the task queue, and send the task tag to the frequency and voltage adjustment control unit. It should be noted that an execution sequence of step 701 and step 702 is not limited. For example, when determining to schedule a task, the task scheduling unit may first schedule the task to a processor core, and then immediately send a task tag of the task to the frequency and voltage adjustment control unit; or may first send a task tag of the task to the frequency and voltage adjustment control unit, and then immediately schedule the task to a processor core. In addition, when sending the task tag of the task, the task scheduling unit may further send, to the frequency and voltage adjustment control unit, an identifier of the processor core to which the task is scheduled, so that the frequency and voltage adjustment control unit learns of the processor core that is to execute the task. Certainly, this is merely an example. In another example, the frequency and voltage adjustment control unit may learn, by exchanging information with each processor core, of a task newly scheduled to each processor core. There are further many possible implementations. The implementations are not enumerated herein.

In this embodiment of this application, each task in the task queue and related information of each task usually may be generated by a task generator and stored in each task queue. The task generator is an interface or a device located outside a processor. When the task generator is an interface, the interface may send a task and related information that are entered by a user by using software to a storage unit in the processor, and the storage unit stores the task and the related information in a task queue randomly or in a specific sequence. When the task generator is a device, the device may receive service code written by a user, compile, split, and configure the service code to obtain a plurality of tasks and corresponding related information, and then send the plurality of tasks and the corresponding related information to a storage unit in a memory, and the storage unit stores the plurality of tasks and the corresponding related information in a task queue randomly or in a specific sequence.

For example, the task generator may split service code of an entire service by using one or more of splitting granularities such as a computing type, an operator type, or a thread type, to obtain different types of tasks through splitting, and then label each type of task with a dedicated task tag. The following uses different types of services as examples to describe how to obtain different tasks in each type of service through splitting.

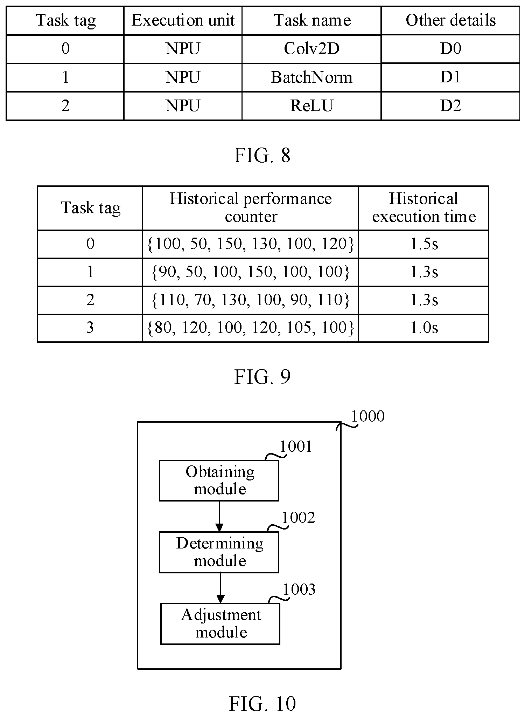

Example 1: A neural network service usually may be split based on the operator type. The operator type may include but is not limited to a 7×7 convolution operator (which is also referred to as an inner product operator), a normalization operator (which is also referred to as an outer product operator), an activation function operator, and the like. Based on the three operators, FIG. 8 is an example of a diagram of task information obtained by splitting a neural network service. As shown in FIG. 8, all 7×7 convolution operators (for example, related code of Colv2D) in the neural network service may be split into tasks of a same type, and have a same task tag (for example, a task tag 0), all normalization operators (for example, related code of BatchNorm) may be split into tasks of a same type, and have a same task tag (for example, a task tag 1), and all activation function operators (for example, related code of ReLU) may be split into tasks of a same type, and have a same task tag (for example, a task tag 2). In addition, the task information obtained through splitting may further include an execution unit, a task name, implementation details, and the like of a task. The neural network service is processed by an NPU-type processor core. Therefore, all corresponding execution units in the task information, of all tasks, obtained through splitting may be NPUs. A task name of each task may be directly set as a computing type of the task, as shown in FIG. 8, or may be set by a person skilled in the art randomly or according to a rule. This is not specifically limited. The implementation details of the task may include implementation code of the task, some configuration information that supports running of the implementation code, a configuration parameter, and the like, and certainly may further include some other information, for example, an execution time of the task.

Example 2: An image processing service (for example, a video browsing service, an image capture service, or an image inpainting service) usually may be split based on the computing type. The computing type may include but is not limited to zoom-in and zoom-out, cropping, blurring, filtering, mirroring, merging, and the like. That is, in the image processing service, all zoom-in and zoom-out processing operations may be split into tasks of a same type, and have a same task tag, all cropping processing operations may be split into tasks of a same type, and have a same task tag, ..., and all combination processing operations may be split into tasks of a same type, and have a same task tag. In addition, the image processing service is processed by a GPU-type processor core. Therefore, all corresponding execution units in task information, of all tasks, obtained through splitting may be GPUs.

Example 3: A general computing service usually may be split based on a thread or a thread bundle. The thread is also referred to as an application or program code. Each part of program code that needs to be processed in parallel in each general computing service may be separately split into one task, and has a same task tag. For example, if a general computing service requires a CPU and a GPU to separately execute a part of program code, the general computing service may be split into two tasks. One task corresponds to the part of program code sent to the CPU and has a unique task tag, and the other task corresponds to the part of program code sent to the GPU and has a unique task tag. After the two tasks are executed in processor cores of respective types, execution results of the two tasks are combined as an execution result of the general computing service.

It should be noted that in the foregoing content, an example in which a sequence number is used as the task tag is merely used for description. In another possible example, the task tag may alternatively be mapped to a form of an address offset, to index a storage address of a historical running feature. In still another possible example, the task tag may alternatively be mapped to a form of a key-value pair in a hash table, to search for a hash address of a historical running feature. In addition, in the foregoing content, how to obtain a task in a service through splitting is described by using only the neural network service, the image processing service, and the general computing service as examples. A splitting operation of another type of service may be directly implemented based on the foregoing content. Details are not described herein in this application.

Further, for example, in the foregoing splitting manner, a complete service may be split into a plurality of tasks, and the plurality of tasks may be sequentially added by the task generator to a task queue based on an execution sequence of the tasks. In this case, the task scheduling unit may directly schedule all the tasks of the service to a processor core by scheduling the entire task queue, and send task tags of all the tasks in the entire task queue to the frequency and voltage adjustment control unit, or may schedule only one or more tasks in the entire task queue to a processor core each time, and send task tags of the one or more tasks to the frequency and voltage adjustment control unit, and then after the one or more tasks are executed, schedule one or more subsequent tasks to the processor core or another processor core based on an execution sequence of the plurality of tasks, and send task tags of the one or more subsequent tasks to the frequency and voltage adjustment control unit, until a last task is scheduled.

Step 703: The frequency and voltage adjustment control unit obtains a historical running feature corresponding to the task tag of the task, and determines a target frequency and a target voltage based on the historical running feature and a state of a voltage domain in which the processor core that is to run the task is located.

For example, as still shown in FIG. 1, the processor 10 may further include a preset correspondence table 130 (which may alternatively be stored in another manner such as a database, a queue, or a stack, and is not specifically limited) between a task tag and a historical running feature, and the correspondence table 130 is connected to the frequency and voltage adjustment control unit 120. In implementation, after scheduling the task to the processor core, the arbitration unit 111 may further send the task tag of the task to the frequency and voltage adjustment control unit 120. After receiving the task tag of the task, the frequency and voltage adjustment control unit 120 may query the correspondence table 130 based on the task tag of the task. If the correspondence table 130 includes the historical running feature corresponding to the task tag of the task, the target frequency and the target voltage are jointly determined based on the historical running feature of the task and the state of the voltage domain. If the correspondence table 130 does not include the historical running feature corresponding to the task tag of the task, the target frequency and the target voltage may be determined based on the state of the voltage domain but without reference to the historical running feature.

It should be noted that the correspondence table 130 may be set inside the power consumption adjustment apparatus 100, as shown in FIG. 1, or may be set outside the power consumption adjustment apparatus 100, for example, set in an external buffer or an internal memory of the processor 10. This is not specifically limited. A historical running feature that corresponds to each task tag and that is stored in the correspondence table 130 may be obtained based on state data existing when the processor core runs a task with the same task tag in recent one time, or may be obtained through weighting based on state data existing when the processor core runs a task with the same task tag in recent several times. When a weighting manner is used for calculation, because state data at a moment closer to a current moment can better represent a real state in the processor core, the state data at the moment closer to the current moment may correspond to a larger weight, to improve accuracy of a subsequently calculated historical running feature. In addition, the historical running feature stored in the correspondence table may be various historical bottleneck degrees used to determine the second frequency in Embodiment 2, or may be values of various instructions in a case of a preset running indicator in Embodiment 2. When the historical running feature is the values of the various instructions in a case of the preset running indicator, each time after the historical running feature is obtained, the frequency and voltage adjustment control unit 120 may further first calculate various historical bottleneck degrees, and then determine a second frequency based on the various historical bottleneck degrees in the manner in Embodiment 2.

FIG. 9 is an example of a schematic diagram of a preset correspondence table between a task tag and a historical running feature. In this example, it is assumed that the historical running feature includes a historical performance counter of a task and a historical execution time of the task. As shown in FIG. 9, in this example, four task tags, namely, a task tag 0, a task tag 1, a task tag 2, and a task tag 3, and historical running features respectively corresponding to the four task tags exist in the correspondence table. If the historical running feature of each task includes historical performance counters of the task in a processor core 1 to a processor core 6 and a historical execution time of the task, historical performance counters of the task tag 0 in the processor core 1 to the processor core 6 are respectively 100, 50, 150, 130, 100, and 120, and a historical execution time of the task tag 0 is 1.5s; historical performance counters of the task tag 1 in the processor core 1 to the processor core 6 are respectively 90, 50, 100, 150, 100, and 100, and a historical execution time of the task tag 1 is 1.3s; historical performance counters of the task tag 2 in the processor core 1 to the processor core 6 are respectively 110, 70, 130, 100, 90, and 110, and a historical execution time of the task tag 2 is 1.3s; and historical performance counters of the task tag 3 in the processor core 1 to the processor core 6 are respectively 80, 120, 100, 120, 105, and 100, and a historical execution time of the task tag 3 is 1.0s. Based on the correspondence table shown in FIG. 9, if the task tag is one or more of 0 to 3, the frequency and voltage adjustment control unit may query and obtain the historical running feature corresponding to the task tag. If the task tag is one or more task tags other than 0 to 3, the frequency and voltage adjustment control unit cannot obtain the historical running feature corresponding to the task tag through query.

It should be noted that in step 702 and step 703, the task scheduling unit sends the task tag to the frequency and voltage adjustment control unit, and the frequency and voltage adjustment control unit obtains the historical running feature of the task based on the task tag. This is merely an optional implementation. In another optional implementation, the task scheduling unit may directly obtain the historical running feature of the task based on the task tag of the task, and send the historical running feature to the frequency and voltage adjustment control unit, to reduce working pressure of the frequency and voltage adjustment control unit. In addition, after the task is scheduled, the frequency and voltage adjustment control unit is indicated to start to calculate the target frequency and the target voltage, to enable, as much as possible, the frequency and voltage adjustment control unit to predict the target frequency and the target voltage before the task is started, so that the predicted target frequency and target voltage are directly configured when the processor core actually starts to execute the task, to effectively shorten a time required for frequency and voltage adjustment, and improve timeliness of configuring the target frequency and the target voltage.

Step 704: The processor core sends a task start message to the task scheduling unit when starting to execute the task.

Step 705: The task scheduling unit collects, based on the task start message, state information existing in a process of executing the task by the processor core.

For example, as still shown in FIG. 1, the processor 10 may further include an information collection and management unit 112, and the information collection and management unit 112 is connected to each processor core and the correspondence table 130 by using a bus. In implementation, when starting to execute the task, the processor core may further directly send the task start message to the information collection and management unit 112, or forward the task start message to the information collection and management unit 112 through the arbitration unit 111. When the task start message is forwarded through the arbitration unit 111, the task start message may further include an identifier of the processor core that is to run the task. In this way, after receiving the task start message, the information collection and management unit 112 may monitor and collect, in real time based on the processor core that sends the task start message or based on the identifier of the processor core included in the task start message, the state information existing in the process of running the task by the processor core that is to run the task.

Step 706: The task scheduling unit sends a configuration indication message to the frequency and voltage adjustment control unit based on the task start message.

Step 707: After receiving the configuration execution message, the frequency and voltage adjustment control unit generates a frequency and voltage adjustment indication message based on the target frequency and the target voltage.

Step 708: The frequency and voltage adjustment control unit sends the frequency and voltage adjustment indication message to the frequency and voltage adjustment execution unit.

For example, as still shown in FIG. 1, when starting to execute the task, the processor core may further send the task start message to the arbitration unit 111. After receiving the task start message, the arbitration unit 111 determines that the processor core starts to execute the task. In this case, the target frequency and the target voltage that are suitable for running the task need to be configured for the processor core. Therefore, the arbitration unit 111 may generate the configuration indication message, and send the configuration indication message to the frequency and voltage adjustment control unit 120. The configuration indication message may further include the identifier of the to-be-configured processor core. In this way, after receiving the configuration indication message, the frequency and voltage adjustment execution unit 120 may send, based on the included identifier of the to-be-configured processor core, the frequency and voltage adjustment indication message that carries the target frequency and the target voltage to the frequency and voltage adjustment execution unit connected to the voltage domain in which the processor core is located, so that the frequency and voltage adjustment execution unit configures the target frequency and the target voltage that are suitable for running the task in the processor core for the processor core.

It should be noted that step 706 to step 708 are actually that the processor core forwards task start-related information to the frequency and voltage adjustment control unit through the arbitration unit. In another possible solution, the frequency and voltage adjustment execution unit may further be connected to each processor core by using the bus. After starting to run the task, the processor core that is to run the task may further directly send the task start message to the frequency and voltage adjustment control unit through the bus. After receiving the task start message, the frequency and voltage adjustment control unit determines that the processor core starts to run the task, and currently, a frequency and a voltage of the processor core need to be configured. Therefore, the frequency and voltage adjustment control unit may generate the frequency and voltage adjustment indication message that carries the target frequency and the target voltage, and send the frequency and voltage adjustment indication message to the frequency and voltage adjustment execution unit connected to the voltage domain in which the processor core is located.

Step 709: The frequency and voltage adjustment execution unit adjusts a working frequency of the processor core to the target frequency and a working voltage of the processor core to the target voltage based on the frequency and voltage adjustment indication message.

For example, considering that a frequency and voltage adjustment operation usually further requires specific execution duration, the historical running feature of the task may further include historical running duration of the task. After obtaining the historical running feature of the task, the power consumption adjustment apparatus may further compare the historical running duration in the historical running feature with preset frequency and voltage adjustment duration. If the historical running duration is less than the preset frequency and voltage adjustment duration, it means that after execution of the task is completed in the future, the power consumption adjustment apparatus possibly cannot adjust work of the processor core to the target frequency and the target voltage that meet a running requirement of the task. In this case, the power consumption adjustment apparatus may no longer perform frequency and voltage adjustment for the task, that is, no longer perform step 709, to reduce a useless execution procedure and save a computing resource. If the historical running duration is not less than the preset frequency and voltage adjustment duration, it means that before execution of the task is completed, work of the processor core can be adjusted to the target frequency and the target voltage that meet a running requirement of the task. In this case, the power consumption adjustment apparatus may perform frequency and voltage adjustment for the task, that is, may perform step 709, so that the processor core executes the task by using a frequency and a voltage that meet the running requirement of the task.

The preset historical running duration may be set by a person skilled in the art based on experience, or may be obtained based on a prior experiment. When the preset frequency and voltage adjustment duration is obtained based on a prior experiment, step 709 may be performed in advance by using an experiment, experiment duration from a time at which step 709 starts to be performed to a time at which execution of step 709 is ended is obtained, and then the preset frequency and voltage adjustment duration is set to duration slightly greater than the experiment duration, to reserve a specific time for using the configured target frequency and target voltage.

Further, for example, when the historical running duration of the task is less than the preset frequency and voltage adjustment duration, the frequency and voltage adjustment execution unit may further obtain K-1 tasks (K is a positive integer greater than or equal to 2) to be executed after the processor core executes the task in the future, and then determine whether K tasks including the task have a same historical running feature. When the K tasks have a same historical running feature, it means that the processor core repeatedly executes the K tasks with a similar feature in the future. In this case, even if the historical running duration of the current task is less than the preset frequency and voltage adjustment duration, the frequency and voltage adjustment execution unit may still perform frequency and voltage adjustment for the processor core provided that total historical running duration of the K tasks is not less than the preset frequency and voltage adjustment duration, but an adjusted frequency and voltage may not be used for the current task, and may be used for a same type of task that has a same historical running feature as the current task. When the K tasks have different historical running features, or the K tasks have a same historical running feature, and total historical running duration of the K tasks is less than the preset frequency and voltage adjustment duration, the frequency and voltage adjustment execution unit may no longer perform frequency and voltage adjustment for the processor core, to avoid a useless procedure and reduce power consumption of the frequency and voltage adjustment execution unit.

In the foregoing example, that the K tasks have a same historical running feature may include one or more of the following content: task tags of the K tasks are the same, that is, the K tasks are tasks of a same type; historical memory access bottleneck degrees of the K tasks fall within a same memory access bottleneck degree range, that is, the memory access bottleneck degrees of the K tasks are the same during running; historical computing bottleneck degrees of the K tasks fall within a same computing bottleneck degree range, that is, the computing bottleneck degrees of the K tasks are the same during running; and historical I/O bottleneck degrees of the K tasks fall within a same I/O bottleneck degree range, that is, the I/O bottleneck degrees of the K tasks are the same during running. Certainly, other historical running features that can be used to determine the second frequency may also be the same. This is not specifically limited.

Step 710: The processor core executes the task by using the target frequency and the target voltage.

Step 711: The processor core sends a task end message to the task scheduling unit after completing execution of the task.

Step 712: After receiving the task end message, the task scheduling unit determines a historical running feature of the task based on state information collected in a time period from a time at which the task start message is received to a time at which the task end message is received, and updates the preset correspondence table between a task tag and a historical running feature by using the task tag of the task and the historical running feature of the task.

For example, as still shown in FIG. 1, after completing execution of the task, the processor core may further directly send the task end message to the information collection and management unit 112, or forward the task end message to the information collection and management unit 112 through the arbitration unit 111. When the task end message is forwarded through the arbitration unit 111, the task end message may further include the identifier of the processor core that is to run the task. In this way, after receiving the task end message, the information collection and management unit 112 may determine, based on the processor core that sends the task end message or based on the identifier of the processor core included in the task end message, that the processor core completes execution of the task. In this case, the information collection and management unit 112 may calculate the historical running feature corresponding to current running of the task based on the state information collected in the time period from the time at which the task start message is received to the time at which the task end message is received. Further, if the correspondence table 130 includes the historical running feature corresponding to the task tag of the task, the information collection and management unit 112 may directly update the original historical running feature by using the newly calculated historical running feature. If the correspondence table 130 does not include the historical running feature corresponding to the task tag of the task, the information collection and management unit 112 may generate a correspondence between the task tag of the task and the newly calculated historical running feature, and add the correspondence to the correspondence table 130.

It should be noted that in step 704 to step 712, it is assumed that the processor core is in a store-before-process working mode. In this working mode, there is a cache queue in the processor core. The task scheduling unit stores a task in a queue tail of the cache queue each time, and the processor core sequentially selects tasks from the cache queue for processing each time in a sequence from a queue head to the queue tail. In this case, after the task scheduling unit schedules the task to the processor core, the processor core may not immediately start to execute the task, but starts to execute the task after waiting for a period of time. Therefore, when the processor core actually starts to execute the task, the task scheduling unit is indicated to collect the state information, so that it can be ensured that state information in a time period of executing the task is accurately collected, and a case in which state information in a process of executing another task in a time period from a time at which the task starts to be scheduled to a time at which the task is actually executed is avoided, to improve accuracy of storing the historical running feature. In addition, when the processor core actually starts to execute the task, the frequency and voltage adjustment control unit is indicated to configure the target frequency and the target voltage, so that it can be further ensured that the frequency and the voltage corresponding to the task are configured for the processor core only when the task is actually executed, to avoid a phenomenon of early configuration or late configuration.

In another case, the processor core may alternatively be in a store-while-process working mode. In this working mode, there is no cache queue in the processor core. Each time after the task scheduling unit schedules a task to the processor core, the processor core immediately starts to execute the task. In this case, when the processor core starts to execute the task, the task scheduling unit may no longer be indicated to collect the state information, and the frequency and voltage adjustment control unit may no longer be indicated to configure the target frequency and voltage for the processor core. Instead, after the task scheduling unit schedules the task to the processor core, the state information of the processor core directly starts to be collected, and the frequency and voltage adjustment control unit is indicated to configure the target frequency and voltage for the processor core, to start, in a timely manner, execution procedures of collecting the state information and performing frequency and voltage adjustment.

In Embodiment 3, an interaction procedure between the task scheduling unit, the processor core, the frequency and voltage adjustment control unit, and the frequency and voltage adjustment execution unit is set, so that the power consumption adjustment solution can be integrated into an original task scheduling process for implementation. In this way, the power consumption adjustment solution may be implemented by modifying only some software logic of an inherent device in the processor, without adding a new device. This helps reduce design costs of the processor. In addition, the power consumption adjustment manner in Embodiment 3 is particularly applicable to an application scenario in which there are a large quantity of repeated tasks. A neural network service is used as an example. In the neural network service, there are a large quantity of convolution operations in an iteration process or between iteration processes. Therefore, splitting is performed by using an operator granularity, so that a same task tag can be allocated to all the convolution operations. In this way, the power consumption adjustment apparatus can accurately find, by using the task tag, tasks that are of a same type and that belong to the convolution operation. The tasks that are of a same type and that belong to the convolution operation have a same operation feature. Therefore, a frequency and a voltage for executing, in the future, a task that belongs to the convolution operation are determined based on a historical running feature of the tasks that are of a same type and that belong to the convolution operation, so that the determined frequency and voltage can be better applied to a future task that belongs to the convolution operation, to effectively improve a task processing capability of the processor core.

According to the foregoing method, FIG. 10 is a schematic diagram of a structure of a power consumption adjustment apparatus 1000 according to an embodiment of this application. The power consumption adjustment apparatus 1000 may be a chip or a circuit, for example, a chip or a circuit that may be disposed in a processor. The power consumption adjustment apparatus 1000 may correspond to the power consumption adjustment apparatus 100 in the foregoing method. The power consumption adjustment apparatus 1000 may implement the steps of the method corresponding to any one or more of the items shown in FIG. 2, FIG. 3, or FIG. 7. As shown in FIG. 10, the power consumption adjustment apparatus 1000 may include an obtaining module 1001, a determining module 1002, and an adjustment module 1003.

In this embodiment of this application, the obtaining module 1001 may be a receiving unit or a receiver when receiving information, and the receiving unit or the receiver may be a radio frequency circuit. In specific implementation, the obtaining module 1001 may obtain a historical running feature of a task; the determining module 1002 may determine a target frequency and a target voltage based on the historical running feature of the task and a state of a voltage domain in which a processor core that is to run the task is located; and the adjustment module 1003 may adjust, based on the target frequency and the target voltage, a frequency and a voltage of each processor core located in the voltage domain.

For concepts, explanations, detailed descriptions, and other steps of the power consumption adjustment apparatus 1000 that are related to the technical solutions provided in embodiments of this application, refer to the descriptions of the content in the foregoing method or other embodiments. Details are not described herein.

It may be understood that for functions of the modules in the power consumption adjustment apparatus 1000, refer to implementation of the corresponding method embodiment. Details are not described herein.

It should be understood that division of the power consumption adjustment apparatus 1000 into the modules is merely logical function division. In actual implementation, all or some of the modules may be integrated into one physical entity, or may be physically separated.

According to the method provided in embodiments of this application, this application further provides a computer program product. The computer program product includes computer program code. When the computer program code runs on a computer, the computer is enabled to perform the method in any one of the embodiments shown in FIG. 2, FIG. 3, or FIG. 7.

According to the method provided in embodiments of this application, this application further provides a computer-readable storage medium. The computer-readable storage medium stores program code. When the program code runs on a computer, the computer is enabled to perform the method in any one of the embodiments shown in FIG. 2, FIG. 3, or FIG. 7.

According to the method provided in embodiments of this application, this application further provides an electronic device. The electronic device includes a processor. The processor is coupled to a memory, and the processor is configured to execute a computer program stored in the memory, to enable the electronic device to perform the method in any one of the embodiments shown in FIG. 2, FIG. 3, or FIG. 7.

Terminologies such as "component", "module", and "system" used in this specification are used to indicate computer-related entities, hardware, firmware, combinations of hardware and software, software, or software being executed. For example, a component may be but is not limited to a process that runs on a processor, a processor, an object, an executable file, an execution thread, a program, and/or a computer. As illustrated by using figures, both a computing device and an application that runs on the computing device may be components. One or more components may reside within a process and/or an execution thread, and a component may be located on one computer and/or distributed between two or more computers. In addition, these components may be executed from various computer-readable media that store various data structures. For example, the components may communicate by using a local and/or remote process and based on, for example, a signal having one or more data packets (for example, data from two components interacting with another component in a local system, a distributed system, and/or across a network such as the Internet interacting with other systems by using the signal).

A person of ordinary skill in the art may be aware that the illustrative logical blocks (illustrative logical block) and steps (step) described based on embodiments disclosed in this specification can be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that for convenient and brief description, for detailed working processes of the system, apparatus, and unit described above, refer to the corresponding processes in the foregoing method embodiments. Details are not described herein.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located at one position, or may be distributed on a plurality of network units. Some or all of the units may be selected based on actual requirements to achieve the objectives of the solutions in embodiments.

In addition, functional units in embodiments of this application may be integrated into one processing unit, each unit may exist alone physically, or two or more units may be integrated into one unit.

When the functions are implemented in a form of a software functional unit and sold or used as an independent product, the functions may be stored in a computer-readable storage medium. Based on such an understanding, the technical solutions in this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The storage medium includes any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but the protection scope of this application is not limited thereto. Any variation or replacement readily figured out by a person skilled in the art within the technical scope disclosed in this application shall fall within the protection scope of this application. Therefore, the protection scope of this application shall be subject to the protection scope of the claims.

## Claims

1. A power consumption adjustment method, wherein the method comprises:
obtaining a historical running feature of a task;
determining a target frequency and a target voltage based on the historical running feature of the task and a state of a voltage domain in which a processor core that is to run the task is located; and
adjusting, based on the target frequency and the target voltage, a frequency and a voltage of each processor core located in the voltage domain.

2. The method according to claim 1, wherein the obtaining a historical running feature of a task comprises:
obtaining a task tag of the task after determining that the task is scheduled to the processor core; and
querying a preset correspondence between a task tag and a historical running feature, to obtain the historical running feature corresponding to the task tag of the task.

3. The method according to claim 2, wherein the method further comprises:
when the preset correspondence between a task tag and a historical running feature does not comprise the historical running feature corresponding to the task tag of the task, determining the target frequency and the target voltage based on the state of the voltage domain.

4. The method according to claim 2 or 3, wherein the method further comprises:
after determining that execution of the task is completed, obtaining a historical running feature existing in a process of executing the task by the processor core, and updating the preset correspondence between a task tag and a historical running feature by using the task tag of the task and the obtained historical running feature.

5. The method according to claim 4, wherein when the historical running feature of the task comprises a historical memory access bottleneck degree of the task, the obtaining a historical running feature existing in a process of executing the task by the processor core comprises:
obtaining the historical memory access bottleneck degree of the task by weighting a value of a memory access instruction in the task in a case of each preset running indicator, wherein
the preset running indicator comprises at least one of the following indicators: a performance counter used when hardware executes the memory access instruction, a quantity of uncompleted memory access instructions sent to an off-chip memory, a cache hit rate of the memory access instruction, a ratio of an execution time of a computing instruction to a total running time of the task, a ratio of an execution time of the memory access instruction to the total running time of the task, a ratio of the execution time of the computing instruction to the execution time of the memory access instruction, and a ratio of a blocking time of the memory access instruction to the total running time of the task.

6. The method according to any one of claims 1 to 5, wherein the determining a target frequency and a target voltage based on the historical running feature of the task and a state of a voltage domain in which a processor core that is to run the task is located comprises:
determining, based on a current temperature and current power consumption of the voltage domain, a maximum first frequency that can be supported by the voltage domain;
determining, based on the historical running feature of the task, a second frequency that meets a running requirement of the task;
using a lower frequency in the first frequency and the second frequency as the target frequency; and
using a voltage corresponding to the target frequency as the target voltage based on a preset correspondence between a frequency and a voltage.

7. The method according to claim 6, wherein the method further comprises:
cyclically determining the first frequency and the second frequency in a running period of the task, and using a lower frequency in a first frequency and a second frequency determined in each cycle as a target frequency in a next cycle, wherein
cycle duration used to determine the first frequency is the same as cycle duration used to determine the second frequency, or cycle duration used to determine the first frequency is different from cycle duration used to determine the second frequency, and the target frequency is used for a cycle corresponding to shorter cycle duration.

8. The method according to claim 6 or 7, wherein when the historical running feature of the task comprises the historical memory access bottleneck degree of the task, the determining, based on the historical running feature of the task, a second frequency that meets a running requirement of the task comprises:
determining, based on a preset correspondence between a memory access bottleneck degree range and a frequency, a target memory access bottleneck degree range to which the historical memory access bottleneck degree of the task belongs, and using a frequency corresponding to the target memory access bottleneck degree range as the second frequency.

9. The method according to any one of claims 1 to 8, wherein when the historical running feature of the task comprises historical running duration of the task, before the adjusting, based on the target frequency and the target voltage, a frequency and a voltage of each processor core located in the voltage domain, the method further comprises:
determining that the historical running duration of the task is not less than preset frequency and voltage adjustment duration.

10. The method according to any one of claims 1 to 8, wherein when the historical running feature of the task comprises historical running duration of the task, before the adjusting, based on the target frequency and the target voltage, a frequency and a voltage of each processor core located in the voltage domain, the method further comprises:
determining that the historical running duration of the task is less than preset frequency and voltage adjustment duration;
obtaining at least one task to be processed after the processor core processes the task;
calculating total historical running duration of at least two tasks comprising the task based on respective historical running duration of the at least two tasks; and
determining that the at least two tasks have a same historical running feature, and the total historical running duration of the at least two tasks is not less than the preset frequency and voltage adjustment duration.

11. A processor, comprising a power consumption adjustment apparatus and M processor cores located in a same voltage domain, wherein the power consumption adjustment apparatus is connected to the M processor cores, wherein M is a positive integer; and
the power consumption adjustment apparatus is configured to: obtain a historical running feature of a task; determine a target frequency and a target voltage based on the historical running feature and a state of a voltage domain in which a processor core that is to run the task is located; and when the processor core is one of the M processor cores, adjust frequencies and voltages of the M processor cores based on the target frequency and the target voltage.

12. The processor according to claim 11, further comprising a frequency and voltage adjustment execution unit connected to the M processor cores, wherein the power consumption adjustment apparatus is further connected to the frequency and voltage adjustment execution unit;
the power consumption adjustment apparatus is specifically configured to: generate a frequency and voltage adjustment indication message based on the target frequency and the target voltage, and send the frequency and voltage adjustment indication message to the frequency and voltage adjustment execution unit; and
the frequency and voltage adjustment execution unit is configured to adjust the frequencies of the M processor cores to the target frequency and the voltages of the M processor cores to the target voltage based on the frequency and voltage adjustment indication message.

13. The processor according to claim 11 or 12, wherein the power consumption adjustment apparatus comprises a task scheduling unit and a frequency and voltage adjustment control unit;
the task scheduling unit is configured to send a task tag of the task to the frequency and voltage adjustment control unit after scheduling the task to the processor core; and
the frequency and voltage adjustment control unit is configured to query a preset correspondence between a task tag and a historical running feature, to obtain the historical running feature corresponding to the task tag of the task.

14. The processor according to claim 13, wherein the frequency and voltage adjustment control unit is further configured to:
when the preset correspondence between a task tag and a historical running feature does not comprise the historical running feature corresponding to the task tag of the task, determine the target frequency and the target voltage based on the state of the voltage domain.

15. The processor according to claim 13 or 14, wherein
the processor core that is to run the task is further configured to: send a task start message to the task scheduling unit when starting to run the task, and send a task end message to the task scheduling unit after ending running of the task; and
the task scheduling unit is further configured to: in a time period from a time at which the task start message is received to a time at which the task end message is received, collect state information existing when the processor core runs the task, determine a historical running feature of the task based on the state information, and update the preset correspondence between a task tag and a historical running feature by using the task tag of the task and the determined historical running feature.

16. The processor according to claim 15, wherein when the historical running feature of the task comprises a historical memory access bottleneck degree of the task, the task scheduling unit determines the historical memory access bottleneck degree of the task in the following manner:
obtaining the historical memory access bottleneck degree of the task by weighting a value of a memory access instruction in the task in a case of each preset running indicator, wherein
the preset running indicator comprises at least one of the following indicators: a performance counter used when hardware executes the memory access instruction, a quantity of uncompleted memory access instructions sent to an off-chip memory, a cache hit rate of the memory access instruction, a ratio of an execution time of a computing instruction to a total running time of the task, a ratio of an execution time of the memory access instruction to the total running time of the task, a ratio of the execution time of the computing instruction to the execution time of the memory access instruction, and a ratio of a blocking time of the memory access instruction to the total running time of the task.

17. The processor according to any one of claims 11 to 16, wherein the processor further comprises a temperature sensor and a power consumption sensor that are connected to the voltage domain;
the temperature sensor is configured to send a current temperature of the voltage domain to the frequency and voltage adjustment control unit;
the power consumption sensor is configured to send current power consumption of the voltage domain to the frequency and voltage adjustment control unit; and
the frequency and voltage adjustment control unit is specifically configured to: determine, based on the current temperature and the current power consumption of the voltage domain, a maximum first frequency that can be supported by the voltage domain; determine, based on the historical running feature of the task, a second frequency that meets a running requirement of the task; use a lower frequency in the first frequency and the second frequency as the target frequency; and use a voltage corresponding to the target frequency as the target voltage based on a preset correspondence between a frequency and a voltage.

18. The processor according to claim 17, wherein the frequency and voltage adjustment control unit is further configured to:
cyclically determine the first frequency and the second frequency in a running period of the task, and use a lower frequency in a first frequency and a second frequency determined in each cycle as a target frequency in a next cycle, wherein
cycle duration used to determine the first frequency is the same as cycle duration used to determine the second frequency, or cycle duration used to determine the first frequency is different from cycle duration used to determine the second frequency, and the target frequency is used for a cycle corresponding to shorter cycle duration.

19. The processor according to claim 17 or 18, wherein when the historical running feature of the task comprises the historical memory access bottleneck degree of the task, the frequency and voltage adjustment control unit is specifically configured to:
determine, based on a preset correspondence between a memory access bottleneck degree range and a frequency, a target memory access bottleneck degree range to which the historical memory access bottleneck degree of the task belongs, and use a frequency corresponding to the target memory access bottleneck degree range as the second frequency.

20. The processor according to any one of claims 11 to 19, wherein when the historical running feature of the task comprises historical running duration of the task, before adjusting, based on the target frequency and the target voltage, a frequency and a voltage of each processor core located in the voltage domain, the frequency and voltage adjustment control unit is further configured to:
determine that the historical running duration of the task is not less than preset frequency and voltage adjustment duration.

21. The processor according to any one of claims 11 to 19, wherein when the historical running feature of the task comprises historical running duration of the task, before adjusting, based on the target frequency and the target voltage, a frequency and a voltage of each processor core located in the voltage domain, the frequency and voltage adjustment control unit is further configured to:
determine that the historical running duration of the task is less than preset frequency and voltage adjustment duration;
obtain at least one task to be processed after the processor core processes the task;
calculate total historical running duration of at least two tasks comprising the task based on respective historical running duration of the at least two tasks; and
determine that the at least two tasks have a same historical running feature, and the total historical running duration of the at least two tasks is not less than the preset frequency and voltage adjustment duration.

22. An electronic device, comprising a processor, wherein the processor is coupled to a memory, and the processor is configured to execute a computer program stored in the memory, to enable the electronic device to perform the method according to any one of claims 1 to 10.
